# EUROPÄISCHE PATENTSCHRIFT

(11) **EP 4 636 392 B1**
(45) Veröffentlichungstag und Bekanntmachung des Hinweises auf die Patenterteilung: **21.10.2026**
(21) Anmeldenummer: 25171176.8
(22) Anmeldetag: 17.04.2025
(51) Int. Cl.: G01N 21/88, G01N 21/95, G06T 7/00

(54) **VORRICHTUNG ZUR INSPEKTION VON 3-DIMENSIONALEN OBJEKTEN**
DEVICE FOR INSPECTING THREE-DIMENSIONAL OBJECTS
DISPOSITIF D'INSPECTION D'OBJETS TRIDIMENSIONNELS

(30) Priorität: 19.04.2024 DE 102024110990; 19.04.2024 DE 102024110992
(43) Veröffentlichungstag der Anmeldung: 22.10.2025
(73) Patentinhaber: ISRA VISION GMBH, 64293 Darmstadt (DE)
(72) Erfinder: Hegels, Daniel, 44143 Dortmund (DE); Zimmermann, Thomas, 45721 Haltern am See (DE); Hülsmann, Jens, 49170 Hagen (DE)
(74) Vertreter: WSL Patentanwälte Partnerschaft mbB

(56) Entgegenhaltungen:
- EP-A1- 4 117 081
- DE-A1- 102022 205 760
- US-A1- 2021 265 673
- US-A1- 2022 390 387
- WANG XU ET AL: "Deep Learning-Based Visual Defect Inspection System for Pouch Battery Packs", 1 January 2023, 20230101, PAGE(S) 54 - 64, XP047643140

## Beschreibung

Die Erfindung betrifft eine Vorrichtung, welche für die Inspektion von 3-dimensionalen Objekten, insbesondere von sogenannten Pouch-Batteriezellen (im Folgenden kurz Pouch-Zellen) geeignet ist, sowie ein entsprechendes Verfahren.

Pouch-Zellen sind ein Batterietyp, welcher insbesondere für Lithium-Ionen-Batterien verwendet wird. Eine Pouch-Zelle besteht in der Regel aus einem kissenartigen Gehäuse oder Verpackung, welche(s) durch eine mit Kunststoff beschichtete Metallfolie (z.B. Aluminiumfolie) gebildet wird. Daher wird eine derartige Zelle auch als Polymer-Batterie bezeichnet. Das Gehäuse ist als ein flexibler, flacher und leichter, nach außen versiegelter Beutel oder Kissen gestaltet. Im Innern des Gehäuses ist in der Regel ein Stapel übereinander liegender Elektrodenschichten, aktiver Schichten und Separatorschichten angeordnet. Die Anschlüsse sind als zwei Laschen (Tabs, Anschlussfahnen) geformt, die an einer Seite nebeneinander, an angrenzenden oder gegenüber liegenden Seiten von dem kissenartigen Gehäuse vorstehen. Pouch-Zellen sind für ihre hohe Energiedichte, ihr kompaktes Design und Flexibilität bekannt, wodurch sie für verschiedene Anwendungen, einschließlich Elektrofahrzeuge, geeignet sind. Die Pouch-Zellen lassen sich leicht vergrößern oder verkleinern, um den spezifischen Anforderungen verschiedener Elektrofahrzeug-Modelle zu erfüllen. Ihr flaches und flexibles Design ermöglicht auch eine einfachere Integration in verschiedene Bereiche des Fahrzeugs, was eine effizientere Verpackung und verbesserte Raumnutzung bewirkt. Nachteilig am Design der Pouch-Zellen ist, dass sie aufgrund ihres Aufbaus generell empfindlich gegenüber mechanischen Beschädigungen sind. Hierdurch können leicht Gase oder Elektrolyt freigesetzt werden oder es kann zu einem starken Aufblähen der Zellen oder inneren Kurzschlüssen kommen.

Es ist daher wünschenswert, derartige und andere 3-dimensionale Objekte bei der Qualitätskontrolle eingehend zu inspizieren, um beschädigte Objekte frühzeitig zu erkennen.

Es werden bereits verschiedene Möglichkeiten für eine Qualitätskontrolle von flachen Objekten wie Batteriezellen offenbart. Beispielsweise ist aus dem Dokument US 2022/0 390 387 A1 ein Verfahren bekannt, bei dem optische Kohärenztomographie (OCT) verwendet wird, um einen Spalt zwischen einer Bleifolie und einer Anschlusslasche (Tab) einer Pouch-Zelle zu inspizieren. Hierdurch kann eine Aussage über die Qualität des Verschlusses der Pouch-Zelle getroffen werden, welche jedoch eine sehr beschränkte Aussagekraft über die Qualität der Pouch-Zelle hat. In dem Dokument EP 4 117 081 A1 wird ein sehr aufwändiges Inspektionssystem beschrieben, das eine Dickenmesseinheit, eine Einheit zur Messung der elektrischen Eigenschaften, eine Bedruckungseinheit, eine Tab-Schneideeinheit, eine Wägeeinheit, eine Tab-Prüfeinheit und eine Fehlerauswahleinheit aufweist. Die Dickenmesseinheit misst die Dicke der Pouch-Zelle und die Bedruckungseinheit dient zum Aufdrucken von Informationen zu der Pouch-Zelle auf deren Oberfläche. Die Tab-Prüfeinheit bestimmt die Länge und die Form des Tabs mittels Vision-Inspektion. Mittels der Fehlerauswahleinheit werden fehlerhafte Pouch-Zellen in hierfür bereitgestellte Magazine ausgesondert. Das Dokument DE 10 2019 109 703 A1 zeigt und beschreibt eine Anordnung zur Qualitätsprüfung einer Batteriezelle, deren transparente Außenhaut einen Innenraum umschließt. Innerhalb des Innenraums, d.h. unter der Außenhaut, ist ein (zusätzlicher) Glasstift oder ein Lithium-Metallblättchen angeordnet, der/das unter Anwesenheit einer vorbestimmten Fluorwasserstoff-Konzentration das optische Erscheinungsbild in diesem Raum ändert. Entsprechend wird in aufwändiger Weise durch optoelektronische Messung dieser Glasstift oder diese Lithium-Metallblättchen analysiert, um die Fluorwasserstoff-Konzentration und somit die Qualität der Batteriezelle bestimmen zu können. Schließlich ist aus dem Dokument EP 3 869 603 A1 ein Verfahren zur Überprüfung von laminierten Elektroden-Separator-Verbunden und Batterien mit Elektroden-Separator-Verbunden im Hinblick auf deren Qualität anzugeben, das für eine Großserienfertigung geeignet ist und eine Überprüfung der sicheren und zuverlässigen Verbindung der Schichten miteinander gewährleistet. Die Überprüfung beinhaltet ein Erfassen wenigstens eines Teils einer Oberfläche des Elektroden-Separator-Verbunds mittels einer Erfassungsvorrichtung zur Erzeugung eines Messergebnisses und die Auswertung des Messergebnisses. Die Erfassungsvorrichtung ist insbesondere geeignet, die Oberflächentopografie, Oberflächentemperatur und/oder Oberflächenfarbe zu erfassen. Dies kann mittels eines optischen Sensors, eines Fotoapparates und/oder einer Kamera erfolgen. Hierbei kann die Erfassungsvorrichtung mindestens eine Beleuchtungseinheit umfassen, die auf die zu erfassende Oberfläche des Elektroden-Separator-Verbunds Licht abgeben kann. Das Auswerten kann eine Bildbearbeitung und/oder Bildanalyse umfassen.

Weitere Systeme zur Inspektion von Objekten sind aus den Dokumenten DE 10 2022 205 760 A1, CN 111 965 185 A, DE 10 2020 109 945 A1 und DE 10 2011 113 670 A1 bekannt.

Die oben angegebenen, bekannten Verfahren sind entweder vergleichsweise aufwändig oder erlauben lediglich eine sehr beschränkte Aussage über die Qualität eines 3-dimensionalen Objekts, insbesondere einer Pouch-Zelle. Daher ist es Aufgabe der vorliegenden Erfindung, eine einfache und kostengünstige Vorrichtung zur Inspektion eines Objekts zu schaffen, die eine umfassende Einschätzung der Qualität dieses Objekts erlaubt. Analog ist es die Aufgabe der Erfindung, ein entsprechendes Verfahren zur Inspektion anzugeben.

Die obige Aufgabe wird durch die Vorrichtung zur Inspektion eines 3-dimensionalen Objekts, insbesondere einer Batteriezelle, beispielsweise in Form einer Pouch-Zelle, mit den Merkmalen des Anspruchs 1 sowie ein entsprechendes Inspektionsverfahren mit den Merkmalen des Anspruchs 11 gelöst.

Insbesondere wird die Aufgabe durch eine Vorrichtung zur Inspektion von 3-dimensionalen Objekten, insbesondere von Batteriezellen in Form von Pouch-Zellen, gelöst, wobei jedes Objekt ein im Wesentlichen kissenförmiges oder quaderförmiges Gehäuse mit einer Oberseite und einer Unterseite (zu dem Gehäuse gehören gegebenenfalls ein erster abragender Anschlusstab (im Folgenden kurz Tab) und gegebenenfalls mindestens ein zweiter abragender Anschlusstab (im Folgenden kurz Tab)) aufweist,
wobei sich die Oberseite des Gehäuses aus mindestens einem (beispielsweise im Wesentlichen horizontal anordnenbaren) oberen Oberflächenabschnitt sowie einer Vielzahl von lateralen Oberflächenabschnitten zusammensetzt, die zu dem mindestens einen oberen Oberflächenabschnitt schräg, parallel oder senkrecht verlaufen oder Eckenabschnitte darstellen,
wobei sich die Unterseite des Gehäuses aus mindestens einem (beispielsweise im Wesentlichen horizontal anordnenbaren, parallel zu dem oberen Oberflächenabschnitt verlaufenden) unteren Oberflächenabschnitt an der Unterseite sowie einer Vielzahl von lateralen Oberflächenabschnitten zusammensetzt, die zu dem mindestens einen unteren Oberflächenabschnitt schräg, parallel oder senkrecht verlaufen oder Eckenabschnitte darstellen,
wobei die Vorrichtung
   - eine Bewegungserfassungseinrichtung, welche in Bezug auf jedes zu inspizierende Objekt Bewegungsinformationen im Hinblick auf eine relative Bewegung zu einer Linien-Beleuchtungseinrichtung (Bewegungszustand) und im Hinblick auf eine Anordnung in einer vorgegebenen Position und über einen vorgegebenen Zeitraum in Bezug auf eine Flächen-Beleuchtungseinrichtung (Ruhezustand) erfasst,
   - die Linien-Beleuchtungseinrichtung zur Beleuchtung eines linienförmigen Bereichs der Oberseite des zu inspizierenden Objekts,
   - die Flächen-Beleuchtungseinrichtung zur Beleuchtung der Oberseite des Gehäuses des zu inspizierenden Objekts von oben in ihrem Ruhezustand,
   - gegebenenfalls mindestens einen, neben jeweils einer Seite des Gehäuses im Ruhezustand des Objekts angeordneten ersten Umlenkspiegel,
   - eine oberhalb des jeweils zu inspizierenden Objekts angeordnete Matrixkamera zur Erfassung von Bildinformationen in einem Sichtbereich umfasst, wobei der Sichtbereich zur
      o zur zeilenweisen Erfassung des von dem linienförmigen Bereich der Oberseite in die Matrixkamera reflektierten Lichts der Linien-Beleuchtungseinrichtung in dem Bewegungszustand des zu inspizierenden Objekts und
      o zur matrixweisen Erfassung des von der Oberseite nach oben reflektierten Lichts der Flächen-Beleuchtungseinrichtung in dem Ruhezustand des zu inspizierenden Objekts, gegebenenfalls einschließlich des von den lateralen Oberflächenabschnitten, wenn anwendbar über den mindestens einen ersten Umlenkspiegel, in die Matrixkamera reflektierten Lichts eingerichtet ist, und
wobei eine Datenverarbeitungseinrichtung vorgesehen ist, welche zum Empfangen und zur Verarbeitung der von der Matrixkamera aufgenommen Bildinformationen und der erfassten Bewegungsinformationen eingerichtet ist, wobei die Datenverarbeitungseinrichtung hierbei dem jeweiligen zu inspizierenden Objekt die im Bewegungszustand zeilenweise erfassten Bildinformationen und die im Ruhezustand matrixweise erfassten Bildinformationen zuordnet und aus diesen Bildinformationen das Vorhandensein eines Fehlers mindestens eines Fehlertyps feststellt und/oder eine Qualitäts-Kennzahl ermittelt, welche eine Beurteilung der Qualität des Objekts erlaubt.

Die Vorrichtung dient zur Inspektion von 3-dimensionalen, beispielsweise flachen Objekten in Kissen- oder Quaderform, insbesondere in der Form von Batteriezellen, beispielsweise von Pouch-Zellen. In einem Ausführungsbeispiel kann die vorliegende Erfindung für ein flaches Objekt eingesetzt werden, wobei als flaches Objekt ein 3-dimensionales Objekt bezeichnet wird, das in eine Raumrichtung (z.B. die Höhe) eine wesentlich geringere Ausdehnung aufweist als in die beiden anderen Raumrichtungen und deshalb im Wesentlichen die Form eines flachen Quaders oder eine Kissenform oder eine diesen Formen ähnliche Form aufweist. Alternativ kann die Abmessung in die eine Raumrichtung auch größer sein, so dass das Objekt als im Wesentlichen quaderförmig bezeichnet wird. Hierbei bedeutet "im Wesentlichen", dass die Form des Objekts dem eines Kissens oder eines Quaders angenähert ist. Zum Beispiel kann der Quader stark abgeschrägte Kanten aufweisen. In vielen Fällen weist ein derartiges Objekt zudem einen ersten Anschlusstab (kurz: Tab, z.B. die Anode) und gegebenenfalls mindestens einen zweiten Anschlusstab (kurz: Tab, z.B. die Kathode) auf, die jeweils seitlich abragen. Jedes Objekt weist ein Gehäuse mit einer Oberseite und einer der Oberseite gegenüber liegenden Unterseite auf, wobei gegebenenfalls vorhandene, abragende Tabs zu dem Gehäuse gehören. Die erfindungsgemäße Vorrichtung kann sowohl zur Inspektion von 3-dimensionalen Objekten, die einen oder mehrere derartige Tabs aufweisen, als auch zur Inspektion von 3-dimensionalen Objekten ohne derartige Tabs verwendet werden. Insbesondere ist die Vorrichtung für flache Objekte geeignet, die, insbesondere an ihrem Rand, stufenförmige oder terrassenförmige Abschnitte oder gegebenenfalls die erwähnten Anschlusstabs aufweisen. Das Objekt wird demnach so betrachtet, dass eine der beiden größten Seiten die oben liegende Oberseite und die gegenüber liegende, ebenfalls große Seite die unten liegende Unterseite bildet. Wenn die Oberseite oben liegt und die Unterseite unten, dann besitzt die Oberseite des Gehäuses mindestens einen, im Wesentlichen horizontal verlaufenden oberen Oberflächenabschnitt, der der Oberflächenabschnitt der Oberseite mit der größten Ausdehnung ist. Es können weitere, horizontal verlaufende Oberflächenabschnitte, die parallel zu dem oberen Oberflächenabschnitt der Oberseite verlaufen, beispielsweise ein Terrassen-Oberflächenabschnitt der Oberseite, vorgesehen sein. Die Oberseite weist weiter eine Vielzahl von lateralen Oberflächenabschnitten auf, die zu dem mindestens einen oberen Oberflächenabschnitt schräg, parallel oder senkrecht verlaufen (z.B. Kanten oder Seitenflächen) oder Eckenabschnitte darstellen. Die lateralen Oberflächenabschnitte umfassen auch die zum oberen Oberflächenabschnitt parallel verlaufenden Abschnitte oder eine Oberfläche eines abragenden Tabs (Tab-Oberfläche). Entsprechend weist die Unterseite des Gehäuses mindestens einen im Wesentlichen horizontal verlaufenden unteren Oberflächenabschnitt, der der Oberflächenabschnitt mit der größten Ausdehnung ist, auf. Es können weitere horizontal verlaufende Oberflächenabschnitte, die parallel zu dem oberen Oberflächenabschnitt der Unterseite verlaufen, beispielsweise ein Terrassen-Oberflächenabschnitt der Unterseite, vorgesehen sein. Die Unterseite weist weiter eine Vielzahl von lateralen Oberflächenabschnitten auf, die zu dem mindestens einen oberen Oberflächenabschnitt schräg, parallel oder senkrecht verlaufen (z.B. Kanten oder Seitenflächen) oder Eckenabschnitte darstellen. Der erste Tab und der gegebenenfalls vorhandene, mindestens eine zweite Tab können beispielsweise von einer kurzen Seite und/oder einer langen Seite abragen und weisen jeweils eine obere Tab-Oberfläche und eine untere Tab-Oberfläche auf. Beispielsweise ragen der erste Tab und der zweite Tab von einer einzigen kurzen oder langen Seite ab. Sie sind in diesem Fall nebeneinander angeordnet. Alternativ können der erste Tab und der zweite Tab von gegenüber liegenden kurzen oder langen Seiten abragen. Das Gehäuse kann in der Draufsicht auf die Oberseite oder Unterseite des Gehäuses eine im Wesentlichen rechteckige Form (ohne Berücksichtigung von eventuell vorhandenen Tabs) haben. Die kurze Seite ist die kurze Seite dieses Rechtecks und die lange Seite stellt die lange Seite dieses Rechtecks dar.

Die Bewegung der zu inspizierenden 3-dimensionalen Objekte erfolgt mittels einer Bewegungseinrichtung, welche die relative Bewegung der zu inspizierenden Objekte zu der Linien-Beleuchtungseinrichtung in einer vorgegebenen Geschwindigkeit (Bewegungszustand), zum Beispiel im Wesentlichen parallel zum oberen Oberflächenabschnitt, beispielsweise in Richtung der größten Ausdehnung des oberen Oberflächenabschnitts (Länge) oder quer dazu bewirkt. Die vorgegebene Geschwindigkeit beträgt beispielsweise mindestens 500 mm/s, z.B. mindestens 800 mm/s. Weiter ist die Bewegungseinrichtung derart eingerichtet, dass sie bei der weiteren Bewegung des jeweiligen Objekts die Anordnung des Objekts in Ruhe an einer vorgegebenen Position und über einen vorgegebenen Zeitraum in Bezug auf eine Flächen-Beleuchtungseinrichtung bewirkt (Ruhezustand). Hierbei kann der vorgegebene Zeitraum der Anordnung des Objekts in dem Ruhezustand zeitlich vor dem Bewegungszustand oder nach dem Bewegungszustand liegen. Der vorgegebene Zeitraum in dem Ruhezustand kann beispielsweise mindestens 300 ms, z.B. mindestens 400 ms betragen. In einem Ausführungsbeispiel wird die Bewegungseinrichtung durch einen Schlitten realisiert, welcher auf einer Lineareinheit in vorgegebener Weise bewegbar ist. Der Schlitten weist beispielsweise Saugnäpfe auf, mittels der das Gehäuse des Objekts an seiner Unterseite an dem Schlitten befestigbar ist. Die Bewegungsinformationen zur Bewegung des zu inspizierenden 3-dimensionalen Objekts (d.h. seine Anordnung im Bewegungszustand und im Ruhezustand, den Ort des Objekts und/oder seine Geschwindigkeit etc.) wird mittels einer Bewegungserfassungseinrichtung erfasst und an die Datenverarbeitungseinrichtung übermittelt. Dort werden die erfassten Bewegungsinformationen (Bewegungsdaten) zusammen mit den erfassten Bildinformationen der Matrixkamera zur Feststellung des Vorhandenseins von Fehlern und/oder der Qualitäts-Kennzahl herangezogen.

Die Linien-Beleuchtungseinrichtung beleuchtet einen linienförmigen Bereich der Oberseite des kissenartigen Gehäuses (gegebenenfalls einschließlich der oberen Tab-Oberfläche des ersten Tabs und/oder des zweiten Tabs). Beispielsweise wird die Linien-Beleuchtungseinrichtung durch eine Leuchte mit einer Vielzahl von LEDs gebildet, die so angeordnet sind, dass sie einen gewünschten linienförmigen Bereich beleuchten. Hierbei können eine LED-Zeile oder für einen breiteren linienförmigen Bereich mehrere, nebeneinander liegende LED-Zeilen (z.B. 2 bis 10 LED-Zeilen) vorgesehen sein. In einem Ausführungsbeispiel wird die Linien-Beleuchtungseinrichtung derart geschaltet, dass sie jeden Punkt des linienförmigen Bereichs mit Licht in zwei verschiedenen Intensitäten (d.h. mit hoher Intensität A und mit niedriger Intensität B) beleuchtet. Entsprechend erfolgt die zeilenweise Erfassung des von dem linienförmigen Bereich der Oberseite (gegebenenfalls einschließlich der oberen Tab-Oberfläche des ersten Tabs und/oder des zweiten Tabs) reflektierten Lichts mit einem angepassten Schaltrhythmus in Form ABABAB... (d.h. die zwei verschiedenen Intensitäten A, B werden im Wechsel geschaltet). Die zeilenweise Erfassung der Bildinformationen (Frequenz der Erfassung und der Zeitpunkt der Erfassung) und die Vorschubgeschwindigkeit der Bewegungseinrichtung sind hierzu synchronisiert. Diese Beleuchtung wird auch als HDR-Reflection-Bright-Field Beleuchtung bezeichnet.

Die Flächen-Beleuchtungseinrichtung beleuchtet die Oberseite des Gehäuses (gegebenenfalls einschließlich der oberen Tab-Oberfläche des ersten Tabs und/oder des zweiten Tabs) der zu inspizierenden Objekte von oben. In einem Ausführungsbeispiel kann die gesamte Oberseite des Gehäuses (gegebenenfalls einschließlich der oberen Tab-Oberfläche des ersten Tabs und/oder des zweiten Tabs) oder zumindest ein großer Abschnitt der Oberseite des Gehäuses (gegebenenfalls einschließlich der oberen Tab-Oberfläche des ersten Tabs und/oder des zweiten Tabs), beispielsweise mindestens 70 %, z.B. mindestens 80%, der gesamten Oberseite des Gehäuses mittels der Flächen-Beleuchtungseinrichtung beleuchtet werden. Beispielsweise trifft das Licht der Flächen-Beleuchtungseinrichtung senkrecht oder schräg, z.B. unter einem Einfallswinkel im Bereich von 10 ° bis 60 ° in Bezug auf die horizontale Richtung auf die Oberseite des Gehäuses (gegebenenfalls einschließlich der oberen Tab-Oberfläche des ersten Tabs und/oder des zweiten Tabs), auf. Mittels der schrägen Beleuchtung durch die Flächen-Beleuchtungseinrichtung können Fehler wie Einkerbungen, Vorsprünge, Kratzer, Faltdefekte, Kantenrisse, Fehler an der Versiegelung und dergleichen topologische Defekte einfach erkannt werden. Fehler in der Form von absorbierenden Defekten (z.B. Kontamination, Fremdkörper an der Oberfläche) können ebenfalls erkannt werden. Die Flächen-Beleuchtungseinrichtung wird durch LED-Spots oder andere Quasi-Punktstrahler realisiert. In einem Ausführungsbeispiel ist oberhalb der Position des zu inspizierenden Objekts im Ruhezustand mindestens ein zweiter Umlenkspiegel angeordnet, der senkrecht zur horizontalen Richtung verläuft und das Licht der Flächen-Beleuchtungseinrichtung so umlenkt, dass es von schräg oben auf die Oberseite des taschenförmigen Gehäuses (gegebenenfalls mit Tabs) fällt. Hierdurch können die Außenmaße der Inspektionsvorrichtung insgesamt kleiner gestaltet werden.

Die Inspektionsvorrichtung zeichnet sich dadurch aus, dass mittels einer einzigen Matrixkamera das reflektierte Licht des linienförmig beleuchteten Bereichs der Oberseite des Gehäuses des zu inspizierenden Objekts in dem Bewegungszustand zeilenweise in der Form von Bildinformationen (Bilddaten, z.B. Intensität und in einem Ausführungsbespiel zusätzlich ein Farbwert) und das reflektierte Licht der von oben beleuchteten Oberseite des Gehäuses (gegebenenfalls einschließlich der oberen Tab-Oberfläche) eines im Ruhezustand angeordneten zu inspizierenden Objekts matrixweise in Form von Bildinformationen (Bilddaten, z.B. Intensität und in einem Ausführungsbespiel zusätzlich ein Farbwert) erfasst werden und diese erfassten Bildinformationen an die Datenverarbeitungseinrichtung übermittelt werden. Die Matrixkamera ist beispielsweise oberhalb des zu inspizierenden Objekts angeordnet, wenn sich das Objekt an der vorgegebenen Position in ihrem Ruhezustand befindet, d.h. die Matrixkamera ist in diesem Ausführungsbeispiel oberhalb der Ruhezustands-Position des zu inspizierenden Objekts angeordnet. Die zeilenweise Erfassung stellt einen Teilbereich des Sichtbereichs der Matrixkamera dar und ergibt hierbei eine Pixelzeile oder mehrere nebeneinander liegende Pixelzeilen (beispielsweise 16 bis 128 Pixelzeilen) mit Bildinformationen, während aus der matrixweisen Erfassung eine Pixelmatrix mit Bildinformationen resultiert, wobei die Pixelmatrix ebenfalls ein Teilbereich des Sichtbereichs darstellt. In einem Ausführungsbeispiel können die Bildinformationen in einem vorgegebenen Wellenlängenbereich ermittelt werden. Der Sichtbereich der Matrixkamera ist so gestaltet, dass matrix- und zeilenweise erfassten Bildinformationen mittels einer einzigen, fest stehenden (d.h. während der Erfassung der Bildinformationen unbeweglichen) Matrixkamera erfasst werden können, die anschließend von der Datenverarbeitungseinrichtung dem jeweiligen Objekts zugeordnet werden. Hierbei kann bei der matrixweisen Erfassung die gesamte Oberseite des Gehäuses (gegebenenfalls einschließlich der oberen Tab-Oberflächen des ersten Tabs und/oder des zweiten Tabs) oder zumindest der mit der Flächen-Beleuchtungseinrichtung beleuchtete Abschnitt der Oberseite des Gehäuses erfasst werden, d.h. zumindest ein großer Abschnitt der Oberseite des Gehäuses (gegebenenfalls einschließlich der oberen Tab-Oberfläche des ersten Tabs und/oder des zweiten Tabs), beispielsweise mindestens 70 %, z.B. mindestens 80%, der gesamten Oberseite des Gehäuses des zu inspizierenden Objekts.

Die Matrixkamera kann beispielsweise als CCD- oder CMOS-Kamera ausgeführt sein. Die Matrixkamera erfasst in dem Sichtbereich die Lichtintensität einer Vielzahl von Bildpunkten, die in Reihen und Spalten, d.h. in einer Matrix, angeordnet sind. Hierfür weist die Matrixkamera für jeden Bildpunkt ein lichtempfindliches Element (z.B. ein CCD- oder CMOS-Sensor) auf. Die Größe des von jedem lichtempfindlichen Element aufgenommenen Bereichs bestimmt die Auflösung der Matrixkamera. Die Matrixkamera kann beispielsweise einen Sichtbereich von 9344 X 7000 Pixeln oder 8192 X 8192 Pixeln aufweisen und hiermit beispielsweise innerhalb des Sichtbereichs matrixweise eine Bildinformation mit einer Größe von 805 X 603 mm erfassen. Die zeilenweise Erfassung kann entsprechend beispielsweise einen Bereich von 16 bis 128 X 1000 bis 8192 Pixel umfassen. Die Matrixkamera ist ferner derart angeordnet, dass sie senkrecht von oben auf das zu inspizierende Objekt in dem Ruhezustand schaut, so dass sie diesem Abschnitt des Sichtbereichs scharf sieht. Hierbei ist die Matrixkamera derart fokussiert, dass eine möglichst gleichmäßige Schärfe über den gesamten Sichtbereich aufweist. Insbesondere ist wird dies für eine Sichtlinie realisiert, bei der die Bildinformationen von dem Objekt über Spiegel in die Matrixkamera gelangt. Dies wird durch eine entsprechende Blendeneinstellung bewirkt, die eine hierfür notwendige Tiefenschärfe realisiert.

In einem Ausführungsbeispiel ist die Matrixkamera derart eingerichtet (z.B. wird derart von der Datenverarbeitungseinrichtung gesteuert), dass die zeilenweise und matrixweise Erfassung der Bildinformationen in einer Erfassungssequenz (zeitliche Abfolge einer Sequenz von Aufnahmen der Matrixkamera über ihr gesamtes Sichtfeld) erfolgt. Diese kann mit einer entsprechenden Steuerung der Beleuchtung (d.h. der Linien-Beleuchtungseinrichtung und/oder der Flächen-Beleuchtungseinrichtung) synchronisiert sein. Hierbei können in einem Ausführungsbeispiel die zeilenweise zu erfassenden Bildinformationen eines ersten zu inspizierenden Objekts (im Bewegungszustand) zumindest teilweise gleichzeitig mit den matrixweise zu erfassenden Bildinformationen einem zweiten zu inspizierenden, von dem ersten Objekt verschiedenen Objekt (im Ruhezustand) aufgenommen werden. Eine derartige Gestaltung der Aufnahmesequenz kann die gesamte, für die Qualitätsbeurteilung des Objekts benötigte Zeit verkürzen. Dies bedeutet, dass die Matrixkamera derart eingerichtet ist, dass zumindest eine ihrer Aufnahmen einer Erfassungssequenz
- die zeilenweise erfassten Bildinformationen von dem linienförmigen Bereich der Oberseite (gegebenenfalls einschließlich der oberen Tab-Oberfläche des ersten Tabs und/oder des zweiten Tabs) reflektierte Licht der Linien-Beleuchtungseinrichtung in dem Bewegungszustand eines ersten Objekts und
- die matrixweise erfassten Bildinformation von der Oberseite (gegebenenfalls der gesamten Oberseite und/oder gegebenenfalls einschließlich der oberen Tab-Oberfläche des ersten Tabs und/oder des zweiten Tabs) nach oben reflektierte Licht der Flächen-Beleuchtungseinrichtung in dem Ruhezustand eines zweiten Objekts, gegebenenfalls einschließlich des von den lateralen Oberflächenabschnitten des zweiten Objekts, wenn anwendbar über den mindestens einen ersten Umlenkspiegel, in die Matrixkamera reflektierte Licht, wobei das zweite Objekt von dem ersten Objekt verschieden ist,
enthält (d.h. in derselben Aufnahme). Erfassungs- und Beleuchtungssequenzen können beispielsweise eine Vielzahl von zeilenweisen Erfassungen des von dem linienförmigen Bereich der Oberseite (gegebenenfalls einschließlich der oberen Tab-Oberfläche des ersten Tabs und/oder des zweiten Tabs) reflektierten Lichts (beispielsweise zwischen 50 und 120 zeilenweise Erfassungen) und, teilweise in derselben Aufnahme, eine von einigen (zwischen 5 und 20) matrixweisen Erfassungen der Oberseite (gegebenenfalls einschließlich der oberen Tab-Oberfläche des ersten Tabs und/oder des zweiten Tabs) enthalten. Alternativ können die zeilenweise zu erfassenden Bildinformationen und die matrixweise zu erfassenden Bildinformationen von zwei verschiedenen Objekten durch die Matrixkamera in der Erfassungssequenz nacheinander aufgenommen werden. In diesem Fall können, um zeitsparend zu arbeiten, lediglich Abschnitte der gesamten Pixelmatrix der Matrixkamera ausgelesen werden, z.B. den entsprechenden Abschnitt der zeilenweisen Erfassung und den entsprechenden Abschnitt der matrixweisen Erfassung.

Bei der Erfassung der Bildinformationen ruht die Matrixkamera (d.h. sie bewegt sich nicht und auch nicht Teile davon) und die Abmessungen des Sichtbereichs der Matrixkamera sind so gestaltet, dass sowohl die zeilenweise zu erfassenden Bildinformationen als auch die matrixweise zu erfassenden Bildinformationen in dem gleichen Sichtbereich enthalten sind. Das zu inspizierende Objekt befindet sich bei der zeilenweisen Erfassung in einem Bewegungszustand, d.h. das zu inspizierende Objekt bewegt sich während der Erstellung der Bildinformationen weiter. Demgegenüber ist das zu inspizierende Objekt bei der matrixweisen Erfassung in Ruhe an einer vorgegebenen Position und über einen vorgegebenen Zeitraum angeordnet (d.h. im Ruhezustand), so dass eine genaue Ermittlung der matrixweise erfassten Bildinformationen möglich ist. Weiter können neben dem zu inspizierenden Objekt mindestens zwei erste Umlenkspiegel vorgesehen sein, die ebenfalls von dem Sichtbereich der Matrixkamera erfasst werden und die weitere Bildinformationen von den lateralen Oberflächenabschnitten der Oberseite des zu inspizierenden Objekts liefern. Diese werden in diesem Ausführungsbeispiel zusammen (gleichzeitig, d.h. in derselben Aufnahme) mit der matrixweisen Erfassung des zu inspizierenden Objekts aufgenommen. Die zeilenweise erfassten Bildinformationen und die matrixweise erfassten Bildinformationen, gegebenenfalls einschließlich der über die ersten Umlenkspiegel übermittelten Bildinformationen, werden dem jeweiligen inspizierten Objekt zugeordnet und in die Ermittlung des Vorhandenseins eines Fehlers mindestens eines Fehlertyps und oder einer Qualitäts-Kennzahl einbezogen. Die Inspektionsvorrichtung ermöglicht aufgrund ihrer oben geschilderten technischen Merkmale eine schnelle und mit wenig Aufwand verbundene Beurteilung der Qualität von verschiedenen Objekten, insbesondere von Pouch-Zellen. Insbesondere ist lediglich eine einzige Matrixkamera für die Qualitätsbeurteilung der Oberseite des Objekts ausreichend.

Aus den von der Matrixkamera an die Datenverarbeitungseinrichtung übermittelten Bildinformationen (Bilddaten) wird durch eine entsprechende Datenverarbeitung das Vorhandensein eines Fehlers mindestens eines Fehlertyps festgestellt und/oder eine Qualitäts-Kennzahl ermittelt, welche eine Beurteilung der Qualität des Objekts erlaubt. Fehlertypen sind z. B. Einschlüsse, Krater (Delle), Vorsprung (Beule), Verschmutzung (Staub, Elektrolyt-Rückstände), Pseudo-Kanten, Orangenhaut, Poren, Rissbildung, Schleifriefen, Stippen, Oberflächenfehler, Blasenbildung, Kratzer, Nassabdruck. Dies wird unten detaillierter ausgeführt.

Die Anordnung und die Neigung des mindestens einen ersten Umlenkspiegel in dem oben beschriebenen Ausführungsbeispiel ist derart gestaltet, dass die Matrixkamera das von einem möglichst großen Bereich der jeweiligen lateralen Oberflächenabschnitte der Oberseite reflektierte Licht empfängt. In einem Ausführungsbeispiel der Vorrichtung sind mindestens zwei, insbesondere vier erste Umlenkspiegel vorgesehen, wobei im Ruhezustand des Objekts jeder erste Umlenkspiegel jeweils neben einer Seite des Gehäuses angeordnet ist. Mit vier ersten Umlenkspiegeln kann das reflektierte Licht der lateralen Oberflächenabschnitte aller Seiten des Gehäuses aufgenommen werden. Hierbei ist jeder erste Umlenkspiegel beispielsweise derart gestaltet, dass seine Länge (größte Abmessung, Abmessung parallel zu der jeweiligen Seite, neben der der erste Umlenkspiegel angeordnet ist) mindestens der Länge der jeweiligen Seite des Gehäuses entspricht. Weiter ist in einem Ausführungsbeispiel jeder erste Umlenkspiegel in horizontaler Richtung in einem Abstand von mindestens 30 mm von der jeweiligen Seite des Gehäuses angeordnet. In einem weiteren Ausführungsbeispiel beträgt die Breite jedes ersten Umlenkspiegels (Abmessung senkrecht zu der jeweiligen Seite, neben der der jeweilige erste Umlenkspiegel angeordnet ist) mindestens 20 mm. Der Kippwinkel des ersten Umlenkspiegels beträgt beispielsweise mindestens 30° zur horizontalen Richtung. Zudem ist es für die Genauigkeit der Inspektion von Vorteil, wenn die Umlenkspiegel eine sehr gute optische Abbildungsqualität realisieren, um Verzerrungen im Bild der Matrixkamera zu vermeiden.

In einem Ausführungsbeispiel der Vorrichtung erstreckt sich der beleuchtete linienförmige Bereich über die gesamte Länge der Oberseite (gegebenenfalls einschließlich der abragenden ersten und zweiten Tabs). Hierbei ist die Länge der Oberseite die Abmessung des Gehäuses in Richtung seiner größten Ausdehnung. In diesem Ausführungsbeispiel können mittels des beleuchteten linienförmigen Bereichs Bildinformationen im Hinblick auf die gesamte Oberseite (und gegebenenfalls beide Tabs) gewonnen werden, wenn das gesamte Objekt an der Linien-Beleuchtungseinrichtung vorbei bewegt wird.

In einem Ausführungsbeispiel der Vorrichtung ist die Flächen-Beleuchtungseinrichtung zur Beleuchtung der Oberseite, z.B. der gesamten Oberseite, des Gehäuses des Objekts in dem Ruhezustand (gegebenenfalls einschließlich der oberen Tab-Oberfläche des ersten Tabs und/oder des zweiten Tabs) des zu inspizierenden Objekts zeitlich nacheinander aus mindestens zwei verschiedenen Richtungen von schräg oben eingerichtet und
die Matrixkamera ist entsprechend für die zeitlich nacheinander erfolgende matrixweise Erfassung der Bildinformationen des von der Oberseite des Gehäuses des Objekts reflektierten Lichts, das durch die Beleuchtung aus den mindestens zwei Richtungen der Flächen-Beleuchtungseinrichtung erzeugt wird, eingerichtet und
die Datenverarbeitungseinrichtung ist entsprechend zum Empfangen und zur Verarbeitung der mindestens zwei matrixweise erfassten Bildinformationen bei der Beleuchtung aus den mindestens zwei Richtungen der Flächen-Beleuchtungseinrichtung eingerichtet, diese Bildinformationen dem jeweiligen Objekt zuordnet und zur Ermittlung des Vorhandenseins eines Fehlers mindestens eines Fehlertyps und/oder der Qualitäts-Kennzahl heranzieht, welche die Beurteilung der Qualität des Objekts erlaubt.

In einem Ausführungsbeispiel der Vorrichtung zieht die Datenverarbeitungseinrichtung für die Ermittlung des Vorhandenseins eines Fehlers mindestens eines Fehlertyps und/oder der Kennzahl ein Maximalbild, ein Topologiebild und/oder ein Absorptionsbild der Bildinformationen heran, welches aus mindestens zwei matrixweise erfassten Bildinformationen bei der Beleuchtung aus den mindestens zwei Richtungen der Flächen-Beleuchtungseinrichtung bestimmt wurde. Das Matrixbild, das Topologiebild und/oder das Absorptionsbild wird jeweils aus den n Aufnahmen zeitlich nacheinander matrixweise erfassten Bildinformationen eines vorgegebenen Bildinformations-Abschnitts erzeugt. Das Maximalbild repräsentiert jeweils die Bildinformationen der Bereiche, die in Bezug auf die jeweilige Beleuchtungssituation am besten erreichbar sind und damit am hellsten dargestellt werden. Das Topologiebild hat den Vorteil, dass es Topologie-Änderungen im Bild hervorhebt, während das Absorptionsbild Fehler, die auf Absorption von Licht beruhen (z.B. Verschmutzungen auf der Oberfläche), akzentuiert. Beispielsweise werden die Bildinformationen pixelidentisch erzeugt, d. h., dass die Bildinformationen der mindestens zwei matrixweisen Erfassungen der gesamten Oberseite (gegebenenfalls einschließlich der oberen Tab-Oberfläche des ersten Tabs und/oder des zweiten Tabs) jeweils von den gleichen Orten der Oberflächen erzeugt. Jede dieser matrixweisen Erfassungen wird als Bildinformations-Matrix M bezeichnet, wobei für jedes Objekt mindestens zwei Bildinformations-Matrizen Mk (k ≥ 2, k= 2 ... n) erfasst werden. Ein Pixel Pi der erfassten ersten Bildinformations-Matrix M1 entspricht somit dem gleichen Ort auf der Oberfläche der Oberseite (gegebenenfalls einschließlich der oberen Tab-Oberfläche) wie der gleiche Pixel Pi die der erfassten zweiten (dritten, vierten usw.) Bildinformations-Matrix Mk (M2, M3, M4, ...Mn). Die erfasste Lichtintensität in dem Pixel Pi wird als i(Pi) bezeichnet. Die erfasste Lichtintensität der ersten Bildinformations-Matrix M1 an dem Pixel Pi wird als i₁(Pi) bezeichnet.

Das Maximalbild kann ermittelt werden, indem das Maximum der Lichtintensitäten aller Bildinformations-Matrizen Mk in dem jeweiligen Pixel Pi gebildet wird, d. h. Max(i₁(Pi), i₂(Pi)) für zwei ermittelte Bildinformations-Matrizen M1, M2 für zwei Beleuchtungen aus zwei unterschiedlichen Richtungen oder Max(i₁(Pi), i₂(Pi), ... iₙ(Pi)), wenn n Beleuchtungen aus n unterschiedlichen Richtungen verwendet werden. In einem Ausführungsbeispiel ist n = 4. Das Maximum wird für jeden Pixel Pi berechnet und ergibt - dargestellt in der gesamten Matrix (Maximalmatrix) - das Maximalbild.

Das Topologiebild und das Absorptionsbild können ermittelt werden, indem zunächst auf jede Bildinformations-Matrix Mk jeder Beleuchtungssituation separat zwei unterschiedlich parametrierte Tiefpassfilter (z.B. Box Filter) unabhängig voneinander angewendet und diese voneinander subtrahiert werden: $Fk = tiefpass 1 \left(Mk\right) - tiefpass 2 \left(Mk\right)$

Dabei unterscheiden sich die Parameter der beiden Tiefpassfilter tiefpass1 und tiefpass2 beispielsweise derart, dass der erste Parameter des ersten Tiefpassfilters tiefpass1 kleiner ist als der zweite Parameter des zweiten Tiefpassfilters tiefpass2. Die durch diese Operation jedem Pixels Pi der Matrix Fk zugeordnete Lichtintensität wird als fk(Pi) (k = 2 ... n) bezeichnet. Anschließend wird von den so entstandenen Matrizen Fk analog zu dem obigen Maximalbild durch pixelweise Bestimmung des Minimums bzw. des Maximums über alle Matrizen Fk eine Minimum-Matrix MinM und eine Maximum-Matrix MaxM berechnet, wobei jeder Punkt Pi der Minimum-Matrix MinM berechnet wird als Min(f1(Pi), f2(Pi), ... fn(Pi)) und jeder Punkt Pi der Maximum-Matrix MaxM berechnet wird als Max(f1 (Pi), f2(Pi), ... fn(Pi)). Anschließend wird eine Matrix H mit den Werten h(Pi) bestimmt, die sich aus dem - wieder jeweils pixelweise ermittelten - Produkt des an dem jeweiligen Punkt Pi berechneten Minimumwert und Maximumwert mit einem Skalierungsfaktor a (beispielsweise a = 64) bestimmt wird. Das heißt, für jeden Punkt Pi ergibt sich der Wert $h \left(Pi\right) = Min \left(f1\left(Pi\right), f2\left(Pi\right), … fn\left(Pi\right)\right) * Max \left(f1\left(Pi\right),f2\left(Pi\right), … fn\left(Pi\right)\right) * a$

Hieraus wird schließlich eine Matrix Q mit den Werten q(Pi) bestimmt, wobei $q \left(Pi\right) = sqrt \left(abs\left(h\left(Pi\right)\right)\right) ,$ wobei abs(q(Pi)) der Betrag (Absolutwert) des Werts q(Pi) ist und sqrt() die Wurzelfunktion darstellt. Hieraus ergeben sich die Werte der Topologiematrix T mit den Werten t(Pi) wie folgt: $t \left(Pi\right) = q \left(Pi\right) , wenn h \left(Pi\right) \leq 0 oder t \left(Pi\right) = 0 , wenn h \left(Pi\right) > 0 .$

Entsprechend ergeben sich die Werte der Absorptionsmatrix A mit den Werten a(Pi) wie folgt: $a \left(Pi\right) = q \left(Pi\right) , wenn h \left(Pi\right) > 0 oder a \left(Pi\right) = 0 , wenn h \left(Pi\right) \leq 0 .$

Die so berechnete Topologiematrix T mit den Werten t(Pi) wird auch als Topologiebild und die Absortionsmatrix A mit den Werten a(Pi) wird auch als Absorptionsbild bezeichnet.

Wenn die matrixweise Erfassung des von der Oberseite (z.B. der gesamten Oberseite und/oder gegebenenfalls einschließlich der oberen Tab-Oberfläche) nach oben reflektierten Lichts der Flächen-Beleuchtungseinrichtung viermal bei einer Beleuchtung aus vier unterschiedlichen Richtungen von schräg oben erfolgt, so werden die Richtungen beispielsweise so gewählt, dass die Beleuchtung von beiden gegenüber liegenden langen Seite und von beiden gegenüber liegenden kurzen Seiten des Gehäuses erfolgt. Alternativ kann die Beleuchtung jeweils aus Richtung der vier Ecken des Gehäuses auf die Oberseite treffen. In einem Ausführungsbeispiel ist es von Vorteil, wenn die Aufnahmen bei Beleuchtungen aus Richtungen erzeugt werden, deren in der Ebene des oberen Oberflächenabschnitts verlaufenden Komponenten insgesamt möglichst einen Winkel von 360 ° abdecken (d.h. bei der Beleuchtung aus vier unterschiedlichen Richtungen erfolgt die Beleuchtung aus jeweils um 90 ° versetzter Richtung oder bei der Beleuchtung aus sechs unterschiedlichen Richtungen erfolgt die Beleuchtung aus jeweils um 60 ° versetzter Richtung usw.).

In einem Ausführungsbeispiel der Vorrichtung ist die Matrixkamera derart kalibriert, dass durch die Datenverarbeitungseinrichtung Perspektive und optische Verzerrung aus den matrixweise erfassten Bildinformationen berücksichtigbar ist. Für eine derartige Kalibrierung wird beispielsweise das in dem Artikel "Digital camera self-calibration", C.S. Fraser, ISPRS Journal of Photogrammetry & Remote Sensing 52 (1997), Seiten 149-159 beschriebene Verfahren verwendet werden. In einem Ausführungsbeispiel der Vorrichtung ist die Datenverarbeitungseinrichtung derart eingerichtet, dass sie nach Berücksichtigung der Perspektive und der optischen Verzerrung mindestens eine Abmessung des Objekts und/oder mindestens eine Größe eines ermittelten Fehlers ermittelt. Hierfür wird beispielsweise vorab anhand der Kalibrierung eine Look-up Tabelle bestimmt, mittels welcher eine Umrechnung einer Pixelzahl in einen Längen- oder Flächeneinheit erlaubt. Die Look-up Tabelle ist beispielsweise in einer Speichereinheit der Datenverarbeitungseinrichtung gespeichert.

In einem Ausführungsbeispiel kann zudem anhand der Kalibrierung und durch Nutzung von Fixpunkten (beispielsweise die Eckpunkte des Gehäuses) mittels der Datenverarbeitungseinrichtung eine Positionskorrektur durchgeführt werden. Hierbei werden durch softwareseitige "Antastung" des Gehäuses in horizontaler und vertikaler Richtung beispielsweise die Koordinaten der vier Eckpunkte des Gehäuses bestimmt. Die Antastung beinhaltet die Untersuchung der jeweiligen Zeilen und Spalten der Bildinformationen-Matrix auf einen Sprung in der Intensität (große Erhöhung oder Abfall der Intensität von einem Pixel zu dem nächsten Pixel). Die Positionskorrektur ist von Vorteil für einen Vergleich der erfassten Bildinformationen der Matrix mit entsprechenden Sollwerten zur Bestimmung von Fehlern oder die Ermittlung einer Qualitäts-Kennzahl, da das Objekt im Ruhezustand nicht immer exakt an der gleichen Position angeordnet werden kann. Durch die Positionskorrektur kann in einem Ausführungsbeispiel zusätzlich der Ort (Lage, Position) jedes ermittelten Fehlers auf der Oberseite (gegebenenfalls einschließlich der oberen Tab-Oberfläche) ermittelt werden. Basierend auf dieser Ortsinformation kann beispielsweise eine der Inspektionsvorrichtung nachgeordnete Markiereinrichtung den Fehler z.B. durch Aufbringen (z.B. Aufsprühen) einer wasserlöslichen Farbe durch Umkreisen auf der Oberfläche des Objekts markieren. Alternativ oder zusätzlich kann durch die Kenntnis des Fehlerorts die Ansteuerung einer Einrichtung zur Fehlerentfernung erleichtert werden.

Die obige Aufgabe wird außerdem durch ein System mit einer ersten Inspektionsvorrichtung mit den oben beschriebenen Merkmalen und einer zweiten Inspektionsvorrichtung mit den oben beschriebenen Merkmalen gelöst, wobei die zweite Inspektionsvorrichtung in Transportrichtung hinter der ersten Inspektionsvorrichtung angeordnet ist, wobei mittels der zweiten Inspektionsvorrichtung die Unterseite des Objekts inspiziert wird, die nach einer Umwendung des Objekts nach der ersten Inspektionsvorrichtung oben liegt. Die Inspektion der Unterseite des Objekts erfolgt beispielsweise analog zur Inspektion der Oberseite des Objekts. Beispielsweise kann in Transportrichtung zwischen der ersten Inspektionsvorrichtung und der zweiten Inspektionsvorrichtung zum Umwenden eine Wendeeinrichtung angeordnet sein, welche das Objekt derart umwendet, dass für die Inspektion in der zweiten Inspektionsvorrichtung die Unterseite oben liegt. Das System ermöglicht die Feststellung von Fehlern und/oder die Ermittlung einer Qualitäts-Kennzahl sowohl auf der Oberseite als auch, nach Passieren der Wendeeinrichtung, auf der Unterseite des Objekts (gegebenenfalls einschließlich der unteren Tab-Oberfläche). Beispielsweise wird die Wendeeinrichtung mittels Greifern und/oder Saugnäpfen realisiert.

Die obige Aufgabe wird auch durch ein Verfahren zur Inspektion von 3-dimensionalen Objekten, insbesondere von Pouch-Zellen, gelöst, wobei jedes Objekt ein im Wesentlichen kissenförmiges oder quaderförmiges Gehäuse mit einer Oberseite und einer der Oberseite gegenüber liegenden Unterseite aufweist,
wobei sich die Oberseite des Gehäuses aus mindestens einem oberen Oberflächenabschnitt sowie einer Vielzahl von lateralen Oberflächenabschnitten zusammensetzt, die zu dem mindestens einen oberen Oberflächenabschnitt schräg, parallel oder senkrecht verlaufen oder Eckenabschnitte darstellen,
wobei sich die Unterseite des Gehäuses aus mindestens einem unteren Oberflächenabschnitt an der Unterseite sowie einer Vielzahl von lateralen Oberflächenabschnitten zusammensetzt, die zu dem mindestens einen unteren Oberflächenabschnitt schräg, parallel oder senkrecht verlaufen oder Eckenabschnitte darstellen,
wobei das Verfahren die folgenden Schritte aufweist:
   - Erfassen von Bewegungsinformationen einer relativen Bewegung jedes zu inspizierenden Objekts zu einer Linien-Beleuchtungseinrichtung (Bewegungszustand) und einer Anordnung des jeweiligen Objekts in einer vorgegebenen Position und über einen vorgegebenen Zeitraum in Bezug auf eine Flächen-Beleuchtungseinrichtung (Ruhezustand) mittels einer Bewegungserfassungseinrichtung,
   - Beleuchten eines linienförmigen Bereichs der Oberseite des zu inspizierenden Objekts mittels der Linien-Beleuchtungseinrichtung, welche beispielsweise eine linienförmige HDR-Reflection-Bright-Field Beleuchtung aussendet,
   - Beleuchten der Oberseite des Gehäuses des zu inspizierenden Objekts von oben in ihrem Ruhezustand mittels der Flächen-Beleuchtungseinrichtung,
   - Erfassung von Bildinformationen in einem Sichtbereich mittels einer oberhalb der Ruhezustands-Position des jeweils zu inspizierenden Objekts angeordnete Matrixkamera, wobei der Sichtbereich
      ∘ zur zeilenweisen Erfassung des von dem linienförmigen Bereich der Oberseite in die Matrixkamera reflektierten Lichts der Linien-Beleuchtungseinrichtung in dem Bewegungszustand eines zu inspizierenden Objekts und
      o zur matrixweisen Erfassung des von der Oberseite nach oben reflektierten Lichts der Flächen-Beleuchtungseinrichtung in dem Ruhezustand des zu inspizierenden Objekts, gegebenenfalls einschließlich des von den lateralen Oberflächenabschnitten des zu inspizierenden Objekts, wenn anwendbar über mindestens einen ersten Umlenkspiegel in die Matrixkamera reflektierten Lichts, eingerichtet ist (wobei der mindestens eine erste Umlenkspiegel neben jeweils einer Seite des Gehäuses im Ruhezustand des Objekts angeordnet ist),
   - Empfangen und Verarbeiten der von der Matrixkamera aufgenommen Bildinformationen mittels einer Datenverarbeitungseinrichtung, wobei die Datenverarbeitungseinrichtung hierbei dem jeweiligen zu inspizierenden Objekt die im Bewegungszustand zeilenweise erfassten Bildinformationen und die im Ruhezustand matrixweise erfassten Bildinformationen zuordnet und aus diesen Bildinformationen das Vorhandensein eines Fehlers mindestens eines Fehlertyps feststellt und/oder eine Qualitäts-Kennzahl ermittelt, welche eine Beurteilung der Qualität des Objekts erlaubt.

In einem Ausführungsbeispiel des Verfahrens erstreckt sich der beleuchtete linienförmige Bereich über die gesamte Länge der Oberseite und/oder es sind mindestens vier erste Umlenkspiegel vorgesehen, wobei jeder erste Umlenkspiegel im Ruhezustand des Objekts jeweils neben einer Seite des Gehäuses angeordnet ist.

In einem Ausführungsbeispiel des Verfahrens wird durch die Matrixkamera zumindest bei einer ihrer Aufnahmen einer Erfassungssequenz
- zeilenweise das von dem linienförmigen Bereich der Oberseite reflektierte Licht der Linien-Beleuchtungseinrichtung in dem Bewegungszustand eines ersten Objekts und
- matrixweise das von der Oberseite nach oben reflektierte Licht der Flächen-Beleuchtungseinrichtung in dem Ruhezustand eines zweiten Objekts, gegebenenfalls einschließlich des von den lateralen Oberflächenabschnitten des zweiten Objekts, wenn anwendbar über den mindestens einen ersten Umlenkspiegel, in die Matrixkamera reflektierte Licht, wobei das zweite Objekt von dem ersten Objekt verschieden ist,
(d.h. in derselben Aufnahme) erfasst.

In einem Ausführungsbeispiel des Verfahrens wird mittels der Flächen-Beleuchtungseinrichtung die Oberseite des Gehäuses des Objekts (die gesamte Oberseite oder ein großer Teil der Oberseite (siehe oben)) in dem Ruhezustand des zu inspizierenden Objekts zeitlich nacheinander aus mindestens zwei verschiedenen Richtungen von schräg oben beleuchtet und
mittels der Matrixkamera werden entsprechend zeitlich nacheinander die Bildinformationen der Matrixkamera für die Beleuchtung aus den mindestens zwei Richtungen der Flächen-Beleuchtungseinrichtung matrixweise erfasst, wobei die Bildinformationen durch an der Oberseite reflektiertes Licht der Flächen-Beleuchtungseinrichtung erzeugt wird, und
mittels der Datenverarbeitungseinrichtung werden die mindestens zwei matrixweise erfassten Bildinformationen bei der Beleuchtung aus den mindestens zwei Richtungen der Flächen-Beleuchtungseinrichtung entsprechend empfangen und verarbeitet, diese Bildinformationen dem jeweiligen Objekt zugeordnet und zur Ermittlung des Vorhandenseins eines Fehlers mindestens eines Fehlertyps und/oder der Qualitäts-Kennzahl herangezogen, wobei die Datenverarbeitungseinrichtung beispielsweise für die Ermittlung des Vorhandenseins eines Fehlers mindesten eines Fehlertyps und/oder der Kennzahl ein Maximalbild der Bildinformationen heranzieht, welches aus den mindestens zwei matrixweise erfassten Bildinformationen bei der Beleuchtung aus den mindestens zwei Richtungen der Flächen-Beleuchtungseinrichtung bestimmt wurde.

In einem Ausführungsbeispiel des Verfahrens wird die Matrixkamera derart kalibriert, dass durch die Datenverarbeitungseinrichtung Perspektive und optische Verzerrung aus den matrixweise erfassten Bildinformationen berücksichtigbar ist, wobei beispielsweise mittels der Datenverarbeitungseinrichtung nach Berücksichtigung der Perspektive und der optischen Verzerrung mindestens eine Abmessung des Objekts und/oder mindestens eine Größe eines ermittelten Fehlers ermittelt wird.

Die Inspektionsvorrichtung kann weitere Beleuchtungseinrichtungen und/oder Kameras aufweisen, die vorgegebene besondere Abschnitte der Oberfläche des Gehäuses beleuchtet oder aus diesen Abschnitten Bildinformationen erzeugt, welche zur Inspektion der Objekte herangezogen werden.

Das Inspektionsverfahren für das Objekt kann auf der Grundlage der erfassten Bildinformationen als ein computerimplementiertes Verfahren, d.h. als ein mit der Datenverarbeitungseinrichtung (Computer) durchgeführtes Verfahren, realisiert werden. Das Verfahren kann auch die Steuerung der Zeilen-Beleuchtungseinheit und/oder der Flächen-Beleuchtungseinheit und/oder der Matrixkamera derart beinhalten, dass eine vorgegebene Erfassungs- und/oder Beleuchtungssequenz realisiert wird. Hierfür sind die Datenverarbeitungseinrichtung und die Zeilen-Beleuchtungseinheit und/oder die Flächenbeleuchtungseinheit miteinander drahtgebunden oder drahtlos verbunden. Die Matrixkamera ist ebenfalls mit der Datenverarbeitungseinrichtung drahtlos oder drahtgebunden verbunden, auch zur Übermittlung der durch die Matrixkamera erfassten Bildinformationen an die Datenverarbeitungseinrichtung.

Die Datenverarbeitungseinheit für die Verarbeitung der Bildinformationen und die Feststellung, ob ein Fehler mindestens eines Fehlertyps vorhanden ist, und/oder die Ermittlung, welche Qualitäts-Kennzahl dem Objekt zugeordnet werden kann, weist einen Prozessor auf, der ein funktionales Modul darstellt, welches Anweisungen/Befehle von Algorithmen interpretiert und ausführt sowie eine Befehlssteuereinheit sowie eine Arithmetikeinheit und eine Logikeinheit aufweist. Der Prozessor kann mindestens einen Mikroprozessor, einen digitalen Signalprozessor (DSP), einen anwendungsspezifischen integrierten Schaltkreis (ASIC), einen Field Programmable Gate Array (FPGA - integrierte Schaltkreis der Digitaltechnik, in den eine logische Schaltung programmiert werden kann), eine diskrete Logikschaltung oder jede Kombination dieser Bausteine aufweisen. Die Datenverarbeitungseinheit kann zudem eine Speichereinheit, ein Eingabemodul (z.B. Tastatur oder Touchpad), ein Energieversorgungsmodul (z.B. Batterie) und ein Anzeigemodul (z.B. Display) aufweisen. Die Datenverarbeitungseinheit kann als reale Hardwareressource, beispielsweise ein Smartphone, Desktop-Computer, Server, Notebook, Cluster/Warehouse Scale Computer, Embedded System oder dergl., oder als virtualisierte Computerressource ausgebildet sein. Weiter kann die Datenverarbeitungseinheit einen Sender/Empfänger (Transceiver) für den Austausch von Daten/Bildinformationen mit einer Anzeigeeinrichtung (Display) aufweisen. Die Datenverarbeitungseinheit weist zudem eine Schnittstelle zum Austausch von Daten mit der Linien-Beleuchtungseinrichtung und/oder der Flächen-Beleuchtungseinrichtung und/oder der Matrixkamera und/oder einer Steuereinrichtung für die Bewegungseinrichtung auf.

Wie oben bereits ausgeführt wurde, kann das oben erläuterte Verfahren z. B. als Computerprogramm oder computerimplementiertes Verfahren realisiert werden, das Anweisungen umfasst, die bei ihrer Ausführung einen Prozessor der Datenverarbeitungseinheit veranlassen, die Schritte des obigen Verfahrens auszuführen, wobei das Computerprogramm eine Kombination der oben beschriebenen Schritte und Datendefinitionen beinhaltet, welche die Computer-Hardware in die Lage versetzen, Rechen- oder Steuerfunktionen auszuführen, und/oder das eine syntaktische Einheit darstellt, die den Regeln einer bestimmten Programmiersprache entspricht und die aus Deklarationen und Anweisungen oder Instruktionen besteht, die für die oben erläuterten Funktionen, Aufgaben oder Problemlösungen benötigt werden.

Weiterhin wird ein Computerprogrammprodukt offenbart, das Anweisungen umfasst, die, wenn sie von dem Prozessor der Datenverarbeitungseinheit ausgeführt werden, die Einrichtung veranlassen, die Schritte eines oder aller oben definierter Verfahren durchzuführen. Entsprechend wird ein computerlesbarer Datenträger offenbart, der ein solches Computerprogrammprodukt speichert. Das Computerprogrammprodukt kann eine Software-Routine sein.

Nachfolgend werden weitere Vorteile, Merkmale und Anwendungsmöglichkeiten der Erfindung anhand von Ausführungsbeispielen und den Figuren beschrieben. Alle beschriebenen und/oder bildlich dargestellten Merkmale bilden dabei den Gegenstand der vorliegenden Erfindung, auch unabhängig von ihrer Zusammenfassung in den Ansprüchen und deren Rückbezügen.

Es zeigen schematisch:
Fig. 1 ein Ausführungsbeispiel einer erfindungsgemäßen Vorrichtung in einer ersten perspektivischen Ansicht von der Seite,
Fig. 2 das Ausführungsbeispiel gemäß Fig. 1 in einer zweiten perspektivischen Ansicht von der Seite,
Fig. 3 das Ausführungsbeispiel gemäß Fig. 1 in einer Ansicht von der Seite mit den Randstrahlen von Beleuchtungseinrichtungen und des Sichtbereichs der Matrixkamera,
Fig. 4 das Ausführungsbeispiel gemäß Fig. 1 in einer Ansicht von vorn mit den Randstrahlen einer Beleuchtungseinrichtung und einem Mittelstrahl des Sichtbereichs der Matrixkamera,
Fig. 5 das Ausführungsbeispiel gemäß Fig. 1 in einer Ansicht von vorn mit den Randstrahlen von Beleuchtungseinrichtungen und den Randstrahlen des Sichtbereichs der Matrixkamera,
Fig. 6 einen unteren Abschnitt des Ausführungsbeispiels gemäß Fig. 1 mit dem Sichtbereich der Matrixkamera in einer Ansicht von oben,
Fig. 7 ein Ausführungsbeispiel eines erfindungsgemäßen Systems in einer perspektivischen Ansicht von der Seite,
Fig. 8 ein erstes Beispiel für die Gestaltung eines Objekts (Pouch-Zelle) in einer perspektivischen Ansicht von der Seite,
Fig. 9 ein zweites Beispiel für die Gestaltung eines Objekts (Pouch-Zelle) in einer perspektivischen Ansicht von der Seite und
Fig. 10 ein Ausführungsbeispiel eines Verfahrens zur Inspektion als Ablaufschema.

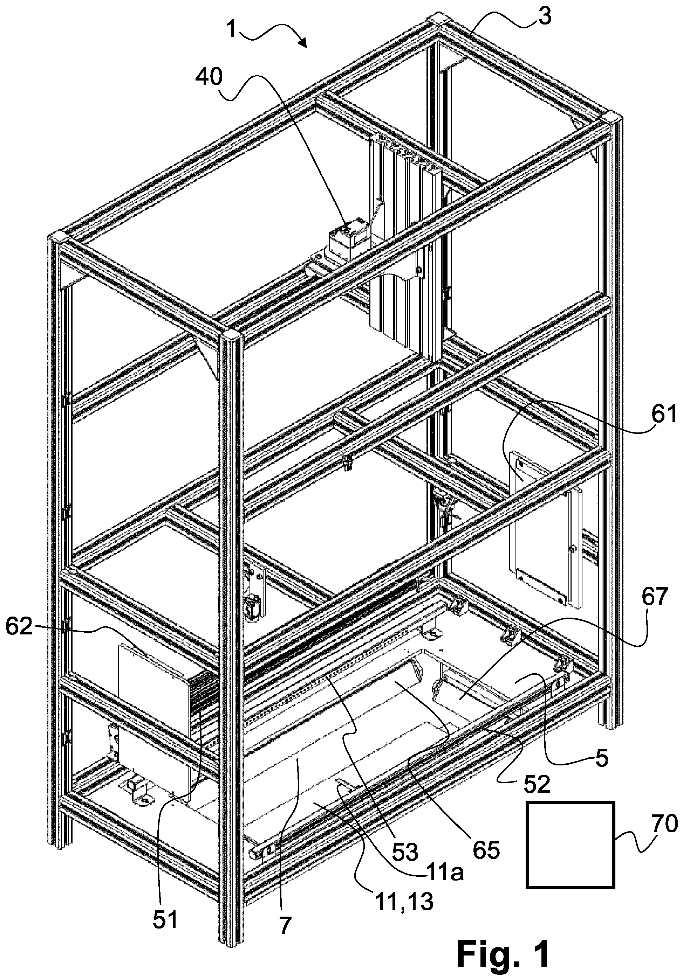

Das in den Fig. 1 bis 6 dargestellte Ausführungsbeispiel einer Inspektionsvorrichtung dient zur Inspektion von Objekten, z.B. in der Form von Pouch-Zellen.

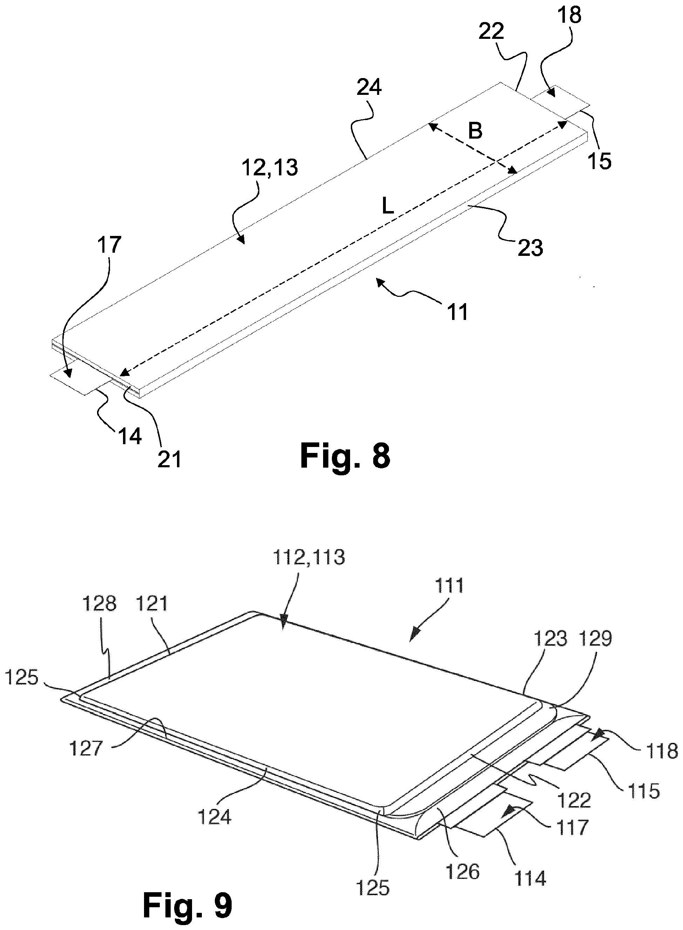

Zwei Beispiele für Pouch-Zellen 11, 111 sind in den Fig. 8 und 9 dargestellt.

Die Pouch-Zelle 11 (siehe Fig. 8) weist ein im Wesentlichen kissenförmiges Gehäuse 12 auf. Das Gehäuse 12 beinhaltet einen von einer kurzen Seite abragenden ersten Anschlusstab (Tab) 14 und einen von der gegenüber liegenden zweiten kurzen Seite abragenden zweiten Anschlusstab (Tab) 15. Das Gehäuse 12 weist eine Oberseite mit einem im Wesentlichen horizontal verlaufenden oberen Oberflächenabschnitt 13 auf. Der erste Tab 14 hat eine obere Tab-Oberfläche 17 und der zweite Tab 15 hat entsprechend eine obere Tab-Oberfläche 18. In Fig. 8 nicht zu sehen sind entsprechende untere Tab-Oberflächen der Tabs 14, 15. Das Gehäuse 12 ist im Wesentlichen quaderförmig gestaltet. An den kurzen Seiten weist das Gehäuse 12 Seitenflächen 21, 22 und an den langen Seiten Seitenflächen 23, 24 auf. Die Seitenflächen 21, 22, 23, 24 verlaufen in etwa senkrecht zu dem horizontalen oberen Oberflächenabschnitt 13. Der horizontale oberen Oberflächenabschnitt 13, die oberen Tab-Oberflächen 17, 18 der Tabs 14, 15 und die Seitenflächen 21, 22, 23, 24 bilden zusammen die Oberseite des Gehäuses 12. Die Unterseite ist entsprechend gestaltet und weist einen horizontalen unteren Oberflächenabschnitt, untere Tab-Oberflächen der Tabs 14, 15 s sowie die Seitenflächen 21, 22, 23, 24 auf. Bei diesem Ausführungsbeispiel gehören die Seitenflächen 21, 22, 23, 24 sowohl zu der Oberseite als auch zu der Unterseite, da diese bei der Inspektion der Oberseite bzw. der Unterseite jeweils ebenfalls erfassbar sind. In Fig. 8 wird die Länge des Gehäuses 12 mit L und die Breite mit B bezeichnet (siehe gestrichelte Doppel-Pfeillinien). Aufgrund der einfachen Gestaltung der Pouch-Zelle 11 wird diese für die Erläuterung der Arbeitsweise der Inspektionsvorrichtung 1 (siehe Fig. 1 bis 6) verwendet. Entsprechend kann die Inspektionsvorrichtung 1 jedoch auch für andere Typen von Objekten, insbesondere in der Form von Pouch-Zellen, verwendet werden.

Fig. 9 zeigt ein zweites Ausführungsbeispiel einer Pouch-Zelle 111, welche ein im kissenförmiges Gehäuse 112 mit einem horizontalen oberen Oberflächenabschnitt 113 aufweist. Das Gehäuse beinhaltet zudem einen ersten Anschlusstab (Tab) 114 und einen zweiten Anschlusstab (Tab) 115, welche nebeneinander angeordnet sind und von einer einzigen kurzen Seite 112 abragen. Der erste Tab 114 besitzt eine obere Tab-Oberfläche 117 und der zweite Tab 115 besitzt eine obere Tab-Oberfläche 118.

Die Pouch-Zelle 111 weist ferner an dem Gehäuse 112 rund um den horizontalen oberen Oberflächenabschnitt 113 Seitenkanten 121, 122, 123, 124 auf, die schräg zu dem horizontalen oberen Oberflächenabschnitt 113 verlaufen und mit einer Rundung in diesen übergehen. Im Übergang einer Seitenkante zu der benachbarten Seitenkante einen 121, 122, 123, 124 sind Ecken 125 ausgebildet. Weiter weist das Gehäuse 112 Terrassenabschnitte 126, 127, 128, 129 auf, die sich jeweils an die Seitenkanten 121, 122, 123, 124 anschließen und im Wesentlichen parallel zu dem horizontalen oberen Oberflächenabschnitt 113 verlaufen. Die Oberseite des Gehäuses 112 wird gebildet durch den horizontalen oberen Oberflächenabschnitt 113, die Seitenkante 121, 122, 123, 124, die Ecken 125 sowie die Terrassenabschnitte 126, 127, 128, 129.

Die in den Fig. 1 bis 6 gezeigte Vorrichtung 1 zur Inspektion der Pouch-Zelle 11 besitzt ein Gestell 3, an dem eine Bodenplatte 5 angeordnet ist, welche eine erste durchgehende Öffnung 7 und eine zweite durchgehende Öffnung 8 (vergleiche Fig. 1, 2 und 6) besitzt. Aus einer Vielzahl von zu inspizierenden Pouch-Zellen sind in den Fig. 1 bis 6 zwei zu inspizierende Pouch-Zellen 11, 31 dargestellt, die unterhalb der Bodenplatte 5 an der Inspektionsvorrichtung 1 vorbeigeführt werden, wie dies die Pfeile 11a und 31a veranschaulichen sollen. Die Pouch-Zelle 31 ist eine weitere Pouch-Zelle mit einem Aufbau, der wie in Fig. 8 dargestellt gestaltet ist.

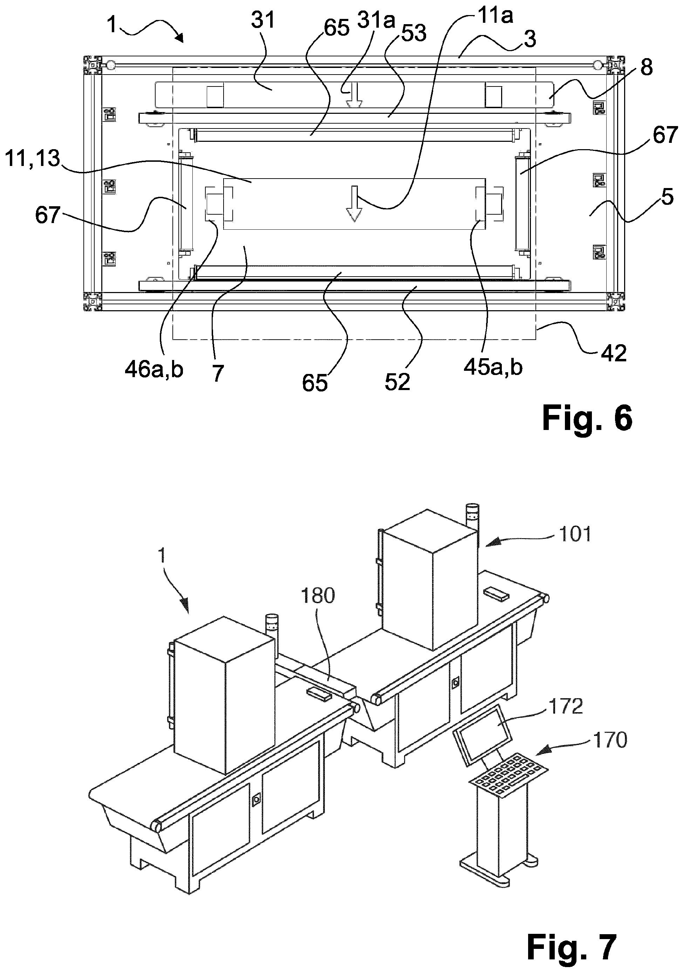

Oberhalb der Bodenplatte 5 ist an dem Gestell 3 eine Matrixkamera 40 angeordnet, die von oben durch die Öffnungen 7, 8 auf die Pouch-Zellen 11, 31 schaut. Hierbei sind die Pouch-Zellen 11, 31 derart angeordnet, dass jeweils die Oberseite des Gehäuses 12 oben liegt und der horizontale obere Oberflächenabschnitt 13 von oben mit der Matrixkamera 40 betrachtet werden kann. Auch die obere Tab-Oberfläche 17 des ersten Tabs 14 und die obere Tab-Oberfläche 18 des zweiten Tabs 15 werden von der Matrixkamera 40 erfasst. Hierbei ist der Sichtbereich 42 der Matrixkamera 40 so groß (siehe insbesondere Fig. 6), dass dieser sich über beide Öffnungen 7, 8 erstreckt, und zwar derart, dass durch den Sichtbereich 42 der Matrixkamera 40 sowohl die unter der jeweiligen Öffnung 7, 8 angeordnete Pouch-Zelle 11, 31 in ihrer gesamten Länge und Breite (von oben betrachtet) als auch neben der Pouch-Zelle 11 angeordnete Umlenkspiegel 65, 67 mit erfasst werden.

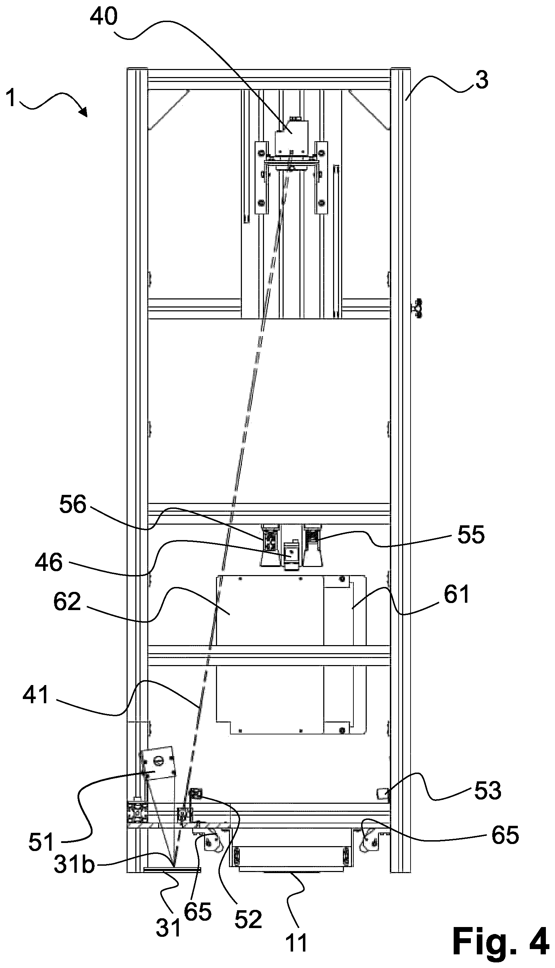

Weiter ist an dem Gestell 3 eine Linien-Beleuchtungseinrichtung 51 vorgesehen, welche einen linienförmigen Bereich 31b der Oberseite des Gehäuses und der oberen Tab-Oberflächen der Tabs beleuchtet. Wie aus Fig. 4 hervorgeht, gelangt das von der Oberseite des Gehäuses (einschließlich der oberen Tab-Oberfläche) reflektierte Licht über den Sichtstrahl 41 in die Matrixkamera 40 und wird dort erfasst. Die Matrixkamera 40 erfasst somit zeilenweise den jeweils beleuchteten linienförmigen Bereich 31b der Pouch-Zelle 31, wobei sich bei der Erfassung die Pouch-Zelle 31 quer zur Länge der Öffnung 8 (siehe Pfeil 31 A in Fig. 6) bewegt, d.h. sich im Bewegungszustand befindet. Es wird somit eine Vielzahl von Aufnahmen mittels der Matrixkamera 40 erzeugt. Jede Aufnahme beinhaltet jeweils eine Aufnahme des jeweils beleuchteten linienförmigen Bereichs der Oberseite des Gehäuses (einschließlich der oberen Tab-Oberflächen) der sich vorbeibewegenden Pouch-Zelle 31. Die Pouchzelle wird mittels einer unten genauer beschriebenen Bewegungseinrichtung im Bewegungszustand bewegt und für einen vorgegebenen Zeitraum in einen Ruhezustand gebracht sowie von dem Ruhezustand aus der Inspektionsvorrichtung herausbewegt.

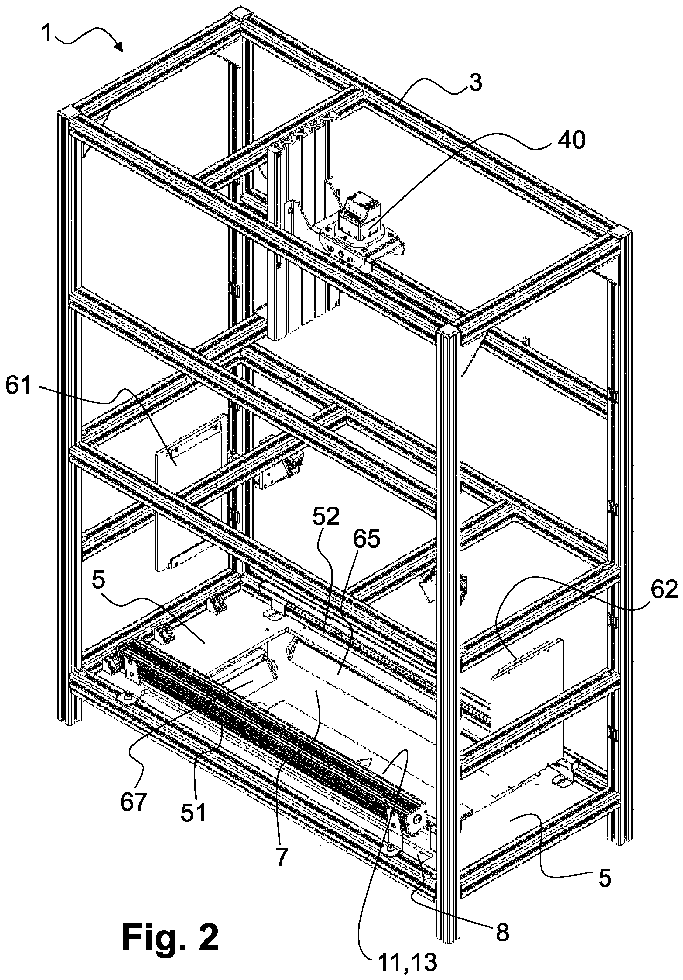

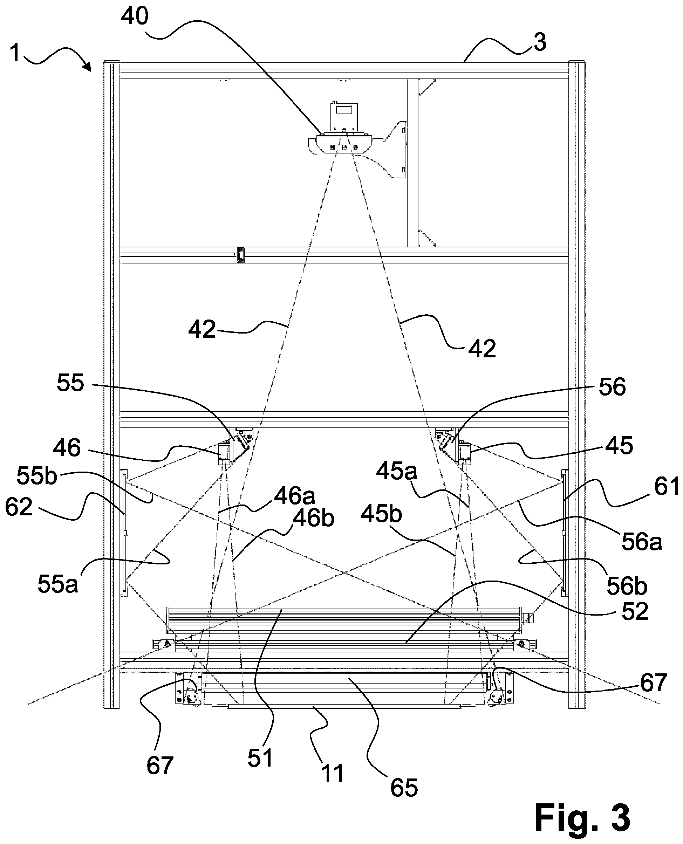

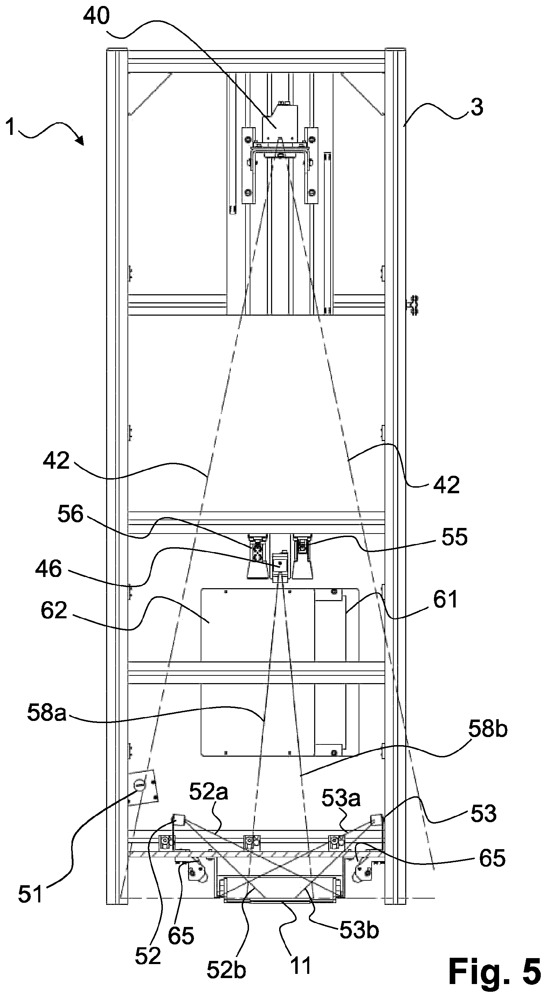

Zudem sind an dem Gestell vier Flächen-Beleuchtungseinrichtungen 52, 53, 55, 56 vorgesehen. Wie aus den Fig. 2, 3, 5 und 6 hervorgeht und die Randstrahlen 52a und 52b bzw. 53a, 53b der Flächen-Beleuchtungseinrichtungen 52, 53 zeigen, beleuchten die Flächen-Beleuchtungseinrichtungen 52, 53 die Oberseite des Gehäuses 12 (einschließlich der oberen Tab-Oberfläche 17, 18 der Tabs 14, 15) der Pouch-Zelle 11 über die gesamte Länge L von schräg oben, sodass insbesondere die der jeweiligen Flächen-Beleuchtungseinrichtung 52, 53 gegenüber liegende Seite bezogen auf die Breite der Pouch-Zelle 11 (vergleiche insbesondere Fig. 5) erfasst, die unterhalb der Öffnung 7 in der Bodenplatte 5 angeordnet ist. Wie aus Fig. 3 zu entnehmen ist, beleuchten die Flächen-Beleuchtungseinrichtungen 55, 56 die Oberseite des Gehäuses 12 (einschließlich der oberen Tab-Oberfläche 17, 18 der Tabs 14, 15) über die Spiegel 61, 62. Hierbei fällt das von der Flächen-Beleuchtungseinrichtung 55 ausgesandte Licht über den Spiegel 62 im Wesentlichen auf das gegenüberliegende erste Ende der Pouch-Zelle 11 und das von der Flächen-Beleuchtungseinrichtung 56 über den Spiegel 61 ausgesandte Licht im Wesentlichen auf das dem ersten Ende der Pouch-Zelle gegenüberliegende zweite Ende der Pouch-Zelle 11 (in Längsrichtung). Dies kann durch die Randstrahlen 55a, 55b, 56a und 56b nachvollzogen werden. Durch die Flächen-Beleuchtungseinrichtungen 52, 53, 55, 56 werden auch die Seitenflächen 21, 22, 23, 24 teilweise mit beleuchtet, sodass Reflexionen von diesen Seitenflächen und von dem horizontal verlaufenden oberen Oberflächenabschnitt 13 des Gehäuses 12 durch die Matrixkamera 40 erfasst werden. Das von den Seitenflächen 21, 22, 23, 24 reflektierte Licht der Flächen-Beleuchtungseinrichtungen 52, 53, 55, 56 wird insbesondere über die Umlenkspiegel 65, 67 erfasst, welche derart neben der unterhalb der Öffnung 7 angeordneten Pouch-Zelle 11 vorgesehen sind, dass mittels der Umlenkspiegel 65 die Seitenflächen 23, 24 an den langen Seiten des betrachtet werden, während die Umlenkspiegel 67 zur Erfassung der Seitenflächen 21, 22 an den kurzen Seite des Gehäuses 12 der Pouch-Zelle 11 dienen.

Die Beleuchtung mittels der Flächen-Beleuchtungseinrichtungen 52, 53, 55, 56 erfolgt nun derart, dass diese einzelnen nacheinander eingeschaltet werden, sodass die Pouch-Zelle 11 jeweils von einer Flächen-Beleuchtungseinrichtung von schräg oben beleuchtetet wird, während die jeweils drei anderen Flächen-Beleuchtungseinrichtungen ausgeschaltet sind. Beispielsweise erfolgt die Beleuchtung zuerst durch die Flächen-Beleuchtungseinrichtung 52, dann durch die Flächen-Beleuchtungseinrichtung 55, danach durch die Flächen-Beleuchtungseinrichtung 53 und schließlich durch die Flächen-Beleuchtungseinrichtung 56. Die Matrix-Kamera 40 erfasst das jeweils reflektierte Licht bei den vier Beleuchtungs-Zuständen, wobei sich die Pouch-Zelle 11 bei allen vier Beleuchtungs-Zuständen im Ruhezustand, d.h. an der gleichen, vorgegebenen Position unterhalb der Öffnung 7 in der Grundplatte 5, befindet. Es werden demnach mittels der Matrix-Kamera 40 vier Aufnahmen der gesamten Oberseite des Gehäuses 12 (einschließlich der oberen Tab-Oberfläche 17, 18) erzeugt, welche diese Bereiche viermal matrixweise erfassen, nämlich je einmal bei eingeschalteter Flächen-Beleuchtungseinrichtung 52, Flächen-Beleuchtungseinrichtung 55, Flächen-Beleuchtungseinrichtung 53 und Flächen-Beleuchtungseinrichtung 56, wobei sich jeweils die Pouch-Zelle 11 an der gleichen Position befindet.

Bei den vier matrixweise Erfassungen der gesamten Oberseite des Gehäuses 12 (einschließlich der oberen Tab-Oberfläche 17, 18) werden über die Umlenkspiegel 65, 67 auch die Seitenflächen 21, 22, 23, 24 erfasst, denn das von diesen Seitenflächen 21, 22, 23, 24 reflektierte Licht gelangt über die Umlenkspiegel 65, 67 zur Matrixkamera 40, denn der Sichtbereich 42 der Matrixkamera 40 schließt diese Bereiche, wie in Fig. 6 dargestellt, ein.

Die Vielzahl der zeilenweisen Erfassungen und der matrixweisen Erfassungen der Pouch-Zelle 11, 31 durch die Matrixkamera 40 wird nach ihrer Erfassung an die Datenverarbeitungseinrichtung (Computer) 70 (vergleiche Fig. 1) übermittelt. Die Datenverarbeitungseinrichtung 70 empfängt die Bildinformationen aus den zeilenweisen und matrixweisen Erfassungen der jeweiligen Pouch-Zelle 11, 31.

Hierbei werden der Bewegungszustand und der Ruhezustand der Pouch-Zellen 11, 31 mittels einer Bewegungserfassungseinrichtung der Inspektionsvorrichtung erfasst. Beispielsweise anhand einer Überwachung der Fortbewegung einer vorgegebenen Markierung auf der Pouch-Zelle 11, 31, beispielsweise eines Barcodes, oder entsprechender Signale von der Bewegungseinrichtung werden Bewegungsinformationen generiert, welche insbesondere die Information zu dem jeweiligen Bewegungszustand, in dem sich die jeweilige Pouch-Zelle 11, 31 befindet, beinhaltet. Beispielsweise kann die Bewegungseinrichtung an die Bewegungserfassungseinrichtung die Information übermitteln, dass eine Pouch-Zelle zur Inspektion bereitsteht (Startsignal). Ab diesem Zeitpunkt kann die Bewegungserfassungseinrichtung kontinuierlich die Bewegungsinformationen der Bewegungseinrichtung und somit der jeweiligen Pouch-Zelle erfassen (z.B. die Bewegungsgeschwindigkeit der Bewegungseinrichtung). Alternativ oder zusätzlich erhält die Bewegungserfassungseinrichtung ein Signal, wenn die zeilenweise Erfassung der jeweiligen Pouch-Zelle beendet ist. Anschließend wird von der Bewegungseinrichtung oder anhand einer Markierung der Pouch-Zelle ein Signal generiert und an die Bewegungserfassungseinrichtung übermittelt, wenn sich die jeweilige Pouch-Zelle an der vorgegebenen Position des Ruhezustands befindet und dort unbewegt verharrt. Nach Abschluss der matrixweisen Erfassung der jeweiligen Pouch-Zelle wird dann von der Bewegungserfassungseinrichtung ein weiteres Signal generiert, welches anzeigt, dass die jeweilige Pouch-Zelle aus der Inspektionsvorrichtung heraus transportiert werden kann. Auch diese Signale stellen wichtige Bewegungsinformationen dar, die für die Verarbeitung der Bildinformationen erforderlich sind.

Diese Bildinformationen und die Bewegungsinformationen werden mittels der Datenverarbeitungseinrichtung 70 weiterverarbeitet und ausgewertet und es wird hieraus, wie unten detaillierter dargestellt wird, das Objekt im Hinblick auf das Vorhandensein eines Fehlers mindestens eines Fehlertyps beurteilt und/oder eine Qualitäts-Kennzahl ermittelt, welche eine Beurteilung der Qualität der Pouch-Zelle 11, 31 erlaubt. Hierbei werden die zu unterschiedlichen Zeitpunkten ermittelten Bildinformationen aus der zeilenweisen Erfassung und der matrixweisen Erfassung der jeweiligen Pouch-Zelle 11, 31 bzw. dem Bewegungszustand und dem Ruhezustand zugeordnet. Dies kann beispielsweise anhand der jeweils von der Bewegungserfassungseinrichtung übermittelten Bewegungsinformationen zum Bewegungszustand und Ruhezustand der jeweiligen Pouch-Zelle 11, 31 erfolgen. Hierbei werden die Bildinformationen der erzeugten Aufnahmen hinsichtlich des Bildzuschnitts, der Spiegelverzerrung, der zeilenweisen Erfassung (sogenannte Linescan-Korrektur) und hinsichtlich der mit dem jeweiligen Bewegungszustand oder Ruhezustand verknüpften Position korrigiert.

Aus den Bildinformationen der zeilenweisen Erfassung der jeweiligen Pouch-Zelle 11, 31 können beispielsweise mittels Hellfeldbeleuchtung (Reflection-Bright-Field (RBF) Beleuchtung) Fehler gesucht bzw. eine Qualitäts-Kennzahl ermittelt werden, die sich insbesondere eine Bewertung der Tab-Oberflächen und eine mögliche Kontamination mittels Elektrolyten beziehen.

Beispielsweise wird, wie unten genauer ausgeführt, durch die Datenverarbeitungseinrichtung 70 aus der Anzahl, Fehlertyp und Größe/Dimension von ermittelten Fehlern eine Qualitätsaussage (Qualitäts-Kennzahl) generiert.

An dem Gestell 3 sind zudem weitere Kameras 45, 46 angeordnet, die unterhalb der Matrixkamera an dem Gestell 3 befestigt sind. Sie blicken derart von oben auf die Oberseite der Pouch-Zelle 11 (siehe Randstrahlen 45a, 45b, 46a, 46b), dass sie eine obere Tab-Oberfläche 17 des ersten Tabs 14 und eine obere Tab-Oberfläche 18 des zweiten Tabs 15 beobachtet sowie einen angrenzenden Abschnitt des oberen Oberflächenabschnitts der Oberseite 13. Die weiteren Kameras 45, 46 erzeugen Bilder mit einer höheren Auflösung in den angegebenen Abschnitten der Pouch-Zelle 11. Die aus den entsprechenden Sichtbereichen gewonnenen Bildinformationen werden an die Datenverarbeitungseinrichtung 70 übermittelt und hieraus weitere Informationen in Bezug auf das Vorhandensein von kleineren Fehlern erzeugt.

Fig. 7 zeigt ein erfindungsgemäßes System zur Inspektion einer Pouch-Zelle. Die Oberseite der Pouch-Zelle (z.B. Pouch-Zelle 11) wird zuerst mittels der Inspektionsvorrichtung 1 inspiziert. Anschließend gelangt die Pouch-Zelle (z.B. Pouch-Zelle 11) zu der Wende-Einrichtung 180 mit einer Dreheinrichtung und Greifern mit Saugnäpfen, welche die Pouch-Zelle (z.B. Pouch-Zelle 11) wendet, dass nun die Unterseite oben liegt. Anschließend wird die Pouch-Zelle (z.B. Pouch-Zelle 11) mittels einer Inspektionsvorrichtung 101, welche baugleich zu der Inspektionsvorrichtung 1 ist, inspiziert, und zwar deren Unterseite (die dort oben liegt). Die Verarbeitung der mittels der Inspektionsvorrichtungen 1, 101 erhaltenen Bilddaten im Hinblick auf die Pouch-Zelle (z.B. Pouch-Zelle 11) und die aus diesen Bildinformationen generierte Feststellung, ob ein Fehler/mehrere Fehler mindestens eines Fehlertyps vorliegt, und/oder Ermittlung einer Qualitäts-Kennzahl, welche eine Beurteilung der Qualität des Objekts erlaubt, erfolgt mittels der Datenverarbeitungseinrichtung 170, welche mit einem Display 172 für die Anzeige der Ergebnisse der Inspektion verbunden ist. Die Pouch-Zelle (z.B. Pouch-Zelle 11) wird von der ersten Inspektionsvorrichtung 1 zu der Wende-Einrichtung 180 und zur zweiten Inspektionsvorrichtung 101 mittels einer Bewegungseinrichtung transportiert, die beispielsweise Schlitten umfasst, die auf einer Lineareinheit verschiebbar sind. Die jeweilige Pouch-Zelle ist mittels Saugnäpfen auf einem Schlitten befestigt. Nach dem Abschluss der Erfassung der Bildinformationen durch die Matrixkamera 40 und gegebenenfalls durch die weiteren Kameras 45, 46, insbesondere nach Abschluss der matrixweisen Erfassung der jeweiligen Pouch-Zelle wird ein entsprechendes Signal durch die Inspektionsvorrichtung erzeugt, welches an die Steuerung der Bewegungseinrichtung übermittelt wird. Die Bewegungseinrichtung wird dann so gesteuert, dass diese die jeweilige Pouch-Zelle aus der jeweiligen Inspektionsvorrichtung 1, 101 herausfördert und gegebenenfalls zur Wende-Einrichtung 180 weitertransportiert, um anschließend gewendet und dann an die zweite Inspektionsvorrichtung 101 weitertransportiert zu werden.

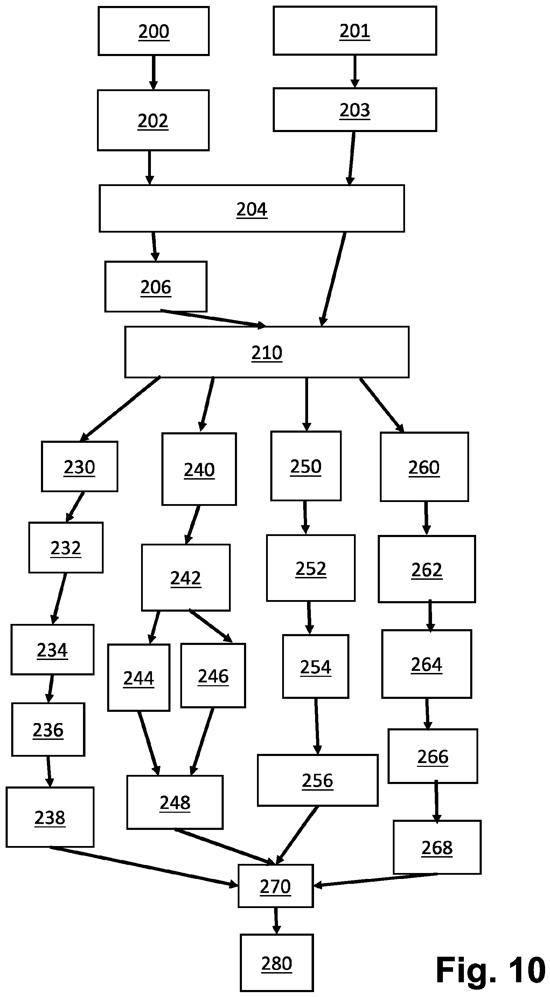

Die Auswertung der erfassten Bildinformationen, um das Vorhandensein eines Fehlers festzustellen und/oder eine Qualitäts-Kennzahl zu ermitteln, kann beispielsweise wie folgt durchgeführt werden. Das Verfahren wird anhand des Ablaufschemas, das in Fig. 10 dargestellt ist, verdeutlicht.

Ausgangspunkt für die Auswertung der erfassten Bildinformationen sind die vier durch Beleuchtung aus unterschiedlichen Beleuchtungsrichtungen erzeugten matrixweise erfassten Bildinformationen 200 der Oberseite des Objekts sowie die zeilenweise erfassten Bildinformationen 201 der Oberseite des Objekts am Beispiel der Pouch-Zelle 101.

Wie oben beschrieben wurde, wird bei den vier matrixweise erfassten Bildinformationen jeweils in einem Schritt 202 zuerst die Perspektive und/oder die optische Verzerrung der Matrixkamera kompensiert. Anschließend wird die bei der optischen Erfassung durch die Matrixkamera vorhandene tatsächliche Lage des Objekts in einem Schritt 204 (Positionskorrektur), wenn erforderlich, so korrigiert, das heißt gedreht und/oder verschoben, dass die Bilddaten eine vorgegebene Position des Objekts im Sichtbereich der Matrixkamera einnehmen. Parallel dazu werden die einzelnen, durch die Datenverarbeitungseinrichtung 70 die zeilenweise erfassten Bildinformationen 201 in Schritt 203 zu einem einzigen Bild zusammengefasst und gegebenenfalls in Bezug auf Unstimmigkeiten/Überlappungen beim Zusammensetzen des Bildes der Oberseite des Objekts aus den zeilenweise erfassten Bildinformationen korrigiert und zwar so, wie dies oben beschrieben wurde. Das Zusammensetzen umfasst hierbei das positionsgerechte Nebeneinandersetzen der zeilenweise erfassten Bildinformationen des Objekts, so dass eine Matrix von Bildinformationen (zweite Gesamtmatrix) entsteht. Mit anderen Worten enthält die zweite Gesamtmatrix die einzeln zeilenweise ermittelten Bildinformationen für die gesamte Oberseite des Objekts oder für einen vorgegebenen Abschnitt dieser Oberseite entsprechend der Position, an der das auftreffende Licht der Linien-Beleuchtungseinrichtung an der Oberseite des Objekts reflektiert wurde, und beinhaltet somit ebenfalls ein Bild der Oberseite des Objekts. Anschließend werden auch diese Daten in Schritt 204, z.B. hinsichtlich ihrer Position und/oder die Größe der Matrix, wie vorstehend beschrieben korrigiert. Die zusammengesetzten und korrigierten zeilenweise erfassten Bildinformationen bilden die zweite Gesamtmatrix.

Für die vier matrixweise erfassten, kompensierten und korrigierten Bildinformationen schließt sich die Bestimmung eines Maximalbilds, eines Absorptionsbilds und/oder eines Topologiebilds in Schritt 206 der Oberseite des Objekts an. Die Berechnung aus den vier Matrizen mit Bildinformationen wird oben im Detail beschrieben. Das Maximalbild wird auch als erste Gesamtmatrix bezeichnet.

Nun wird in Schritt 210 eine Segmentierung vorgenommen. Für die Segmentierung können beispielsweise Layout-Rezepte verwendet werden, um gewünschte Bildinformations-Abschnitte aus der jeweiligen, durch matrixweise Erfassung oder zeilenweise Erfassung bestimmten (korrigierten) Bildinformationsmatrix der Oberseite zu extrahieren.

Grundsätzlich definiert bei der Segmentierung mittels Layout-Rezept das Layout-Rezept einen vorgegebenen Abschnitt des Objekts hinsichtlich des Sichtbereichs der Matrixkamera vor. Da das Objekt sich bei der Bildaufnahme durch die Matrixkamera nicht immer exakt in der vorgegebenen Ideallage befindet, sondern um ein paar Pixel verschoben/rotiert sein kann, wird beispielsweise anhand von vorgegebenen Fixpunkten des Objekts eine Positionskorrektur durchgeführt, das heißt eine Registrierung zur erwarteten Position durchgeführt, so dass die erste Gesamtmatrix (oder entsprechend die n ersten Gesamtmatrizen oder die aus der zeilenweise Betrachtung ermittelten zweite Gesamtmatrix) entsprechend an die Ideallage des Objekts angepasst wird. Die genannten Matrizen mit Bildinformationen werden entsprechend rotiert und/oder verschoben.

Wenn diese Anpassung erfolgt ist, können die gewünschten Bildinformations-Abschnitte über das vorgegebene Layout-Rezept sicher identifiziert und entsprechend extrahiert werden.

Beispielsweise wird ein erster Bildinformations-Abschnitt in Form des oberen Oberflächenabschnitts (Bildinformationen aus direkter Aufnahme durch die Kamera/Matrixkamera) 113, ein zweiter Bildinformations-Abschnitt aus den Aufnahmebereichen über die Spiegel an der kürzeren Seite in Form der jeweils zwei Eck-Abschnitte 125 und ein weiterer zweiter Bildinformations-Abschnitt in Form der vier Terrassenabschnitte (Bildinformationen aus direkter Aufnahme durch die Kamera/Matrixkamera) 126, 127, 128, 129 extrahiert. Die Segmentierung erfolgt sowohl im Hinblick auf die korrigierten und zusammengesetzten zeilenweise erfassten Bildinformationen (d.h. aus der zweiten Gesamtmatrix) als auch in Bezug auf die matrixweise erfassten, kompensierten und korrigierten Bilddaten sowie das Maximalbild (erste Gesamtmatrix) und/oder das Absorptionsbild und/oder das Topologiebild. Anschließend werden die durch Segmentierung gewonnenen Bildinformations-Abschnitte auf parallelen Wegen verarbeitet und schließlich einer Gesamtbewertung des Objekts zugeführt.

Das Ergebnis der Segmentierung ist in Schritt 230 beispielsweise ein Bildinformations-Abschnitt der oberen Oberfläche jeweils in dem Maximalbild, in dem Absorptionsbild, in dem Topologiebild und in der zweiten Gesamtmatrix. In Schritt 232 untersucht die Datenverarbeitungseinrichtung 70 zu jedem dieser Bildinformations-Abschnitte in Bezug auf jeden Pixel, ob diese einen vorgegebenen Schwellwert überschreiten. Ein derartiger Schwellwert könnte bei dem Bildinformations-Abschnitt des Maximalbilds bei 240 liegen, bei dem Bildinformations-Abschnitt des Topologiebilds bei 220, bei dem Bildinformations-Abschnitt des Absorptionsbilds bei 203 und bei dem Bildinformations-Abschnitt der zweiten Gesamtmatrix bei 120. Liegt der Bildinformations-Wert des jeweiligen Pixels bei dem jeweiligen Schwellwert oder darüber, dann wird ein Fehler erkannt. Anschließend werden in Schritt 234 weitere Eigenschaften des gefundenen Fehlers ermittelt, beispielsweise dessen Größe (durch die Analyse, ob ein Fehler auch bei benachbarten Pixeln erkannt wurde) in Pixeln, ein Histogramm der Bildinformations-Werte im Bereich des jeweiligen Fehlers, und/oder die Form und Ausrichtung des Fehlers. Anhand der Eigenschaften des gefundenen Fehlers und gegebenenfalls weiterer in dem Bildinformations-Abschnitt gefundener Fehler wird danach in Schritt 236 der Fehlertyp bestimmt, wobei hierfür verschiedene Bilder/Matrizen in Bezug auf den gleichen Ort des Bildinformations-Abschnitts herangezogen werden können. Beispielsweise kann aufgrund eines Nichtvorliegen eines Fehlers an der Stelle im Absorptionsbild, aufgrund des ermittelten Wertes Länge zu Breite im Absorptionsbild von größer als 5 und aufgrund eines mittleren Werts eines Bildinformations-Histogramms entlang des Fehlers im Topologiebild, der größer als 200 ist, insgesamt auf den Fehlertyp "Kratzer" geschlossen werden. In Schritt 238 wird dann der Schweregrad des erkannten Kratzer-Fehlers ermittelt, wobei die Ermittlung beispielsweise auf einer Zuordnung der Größe des Kratzers zu Schweregrad-Klassen erfolgen kann. Hierbei kann, wenn der Fehler kleiner als 2 Pixel ist, dem Kratzer-Fehler der Schweregrad Null, wenn der Fehler größer oder gleich 2 Pixel und kleiner als 4 Pixel ist, dem Kratzer-Fehler der Schweregrad 1, wenn der Fehler größer oder gleich 4 Pixel und kleiner als 6 Pixel ist, dem Kratzer-Fehler der Schweregrad 2 und so weiter zugeordnet werden.

Das Ergebnis der Segmentierung sind in Schritt 240 beispielsweise Bildinformations-Abschnitte in Form von vier "Eckenabschnitten" (z.B. 128 x 128 Pixel) aus dem in Schritt 206 bestimmten Maximalbild, wobei die "Eckenabschnitte" beispielsweise aus den über die Spiegel 67 an der kurzen Seite des Pouches erzeugten Bildinformationen gewonnen werden. Auf diese Bildinformations-Abschnitte wird in Schritt 242 nun jeweils ein unten erläuterter CNN-Algorithmus mit binärem Klassifikator angewendet. Als Ergebnis wird zu jedem Ecken-Bildinformations-Abschnitt das Attribut "defekte Ecke" (Schritt 244) oder "intakte Ecke" (Schritt 246) bestimmt und in Schritt 248 der jeweiligen Ecke zugeordnet.

Die Ecken-Bildinformationsmatrix jedes Eckenabschnitts kann beispielsweise mittels eines Convolutional Neural Network (CNN)-Algorithmus analysiert werden, der einen binären Klassifikator (Klassifikator mit zwei Zuständen, nämlich "intakte Ecke" und "defekte Ecke") beinhaltet. Die Ecken-Bildinformationsmatrix ist hierbei vergleichsweise klein (beispielsweise 128 x 128 Pixel) definiert und zugrunde liegenden Bildinformationen stammen lediglich aus dem Bereich der jeweiligen Ecke des Gehäuses. Dieses CNN-Modell wurde speziell für diese Klassifizierungsaufgabe mit wenigen Klassen und für Matrizen mit wenigen Pixeln entwickelt. Dieses CNN-Modell weist eine kompakte Struktur auf, die beispielsweise kompakter ist als herkömmliche tiefe Architekturen. Es besteht beispielsweise aus drei Strängen mit unterschiedlichen Faltungsgrößen, die später zusammengeführt werden. Durch diese Struktur wird die Anzahl der zu trainierenden Parameter reduziert, so dass das Modell weniger Merkmale erlernen kann. Aus diesem Grund ist es ideal für eine binäre oder andere niedrigdimensionale Klassifikation geeignet. Für das Training und die Evaluierung des CNN-Modells wird ein großer und breiter Datensatz enthaltend Matrizen von Eckenstrukturen und entsprechende, zu erwartende Fehler verwendet. Er wird in Bezug auf das jeweilige, zu untersuchende Objekt zusammengestellt und von Ingenieuren annotiert. Dieser Datensatz enthält Bilder von Ecken der jeweiligen Objekte (d.h. der zu inspizierenden Pouch-Zellen), die in zwei Klassen aufgeteilt sind: "defekt" und "intakt". Die Bilder werden sorgfältig ausgewählt und annotiert, um sicherzustellen, dass sie eine breite Palette von Fehlern und Variationen in den Ecken abdecken. Das Training des Modells wird mit dem Datensatz durchgeführt, wobei die Bilder des Datensatzes in Trainingssatze und Validierungssatze aufgeteilt werden können. Beispielsweise kann ein Verhältnis von 80% für die Trainingsdaten und 20% für die Validierungsdaten verwendet werden. Zudem kann eine fünffache Kreuzvalidierung durchgeführt werden, um sicherzustellen, dass alle Bilder in den Trainingsdaten und in den Validierungsdaten vorkommen. Das Modell besteht aus mehreren Convolutional-Layern, Pooling-Layern und Fully Connected-Layern, die es dem Modell ermöglichen, wichtige Merkmale in den Bildern zu extrahieren und die feinen Unterschiede zwischen defekten und intakten Ecken zu erkennen. Mithilfe der Convolutional-Layer werden die trainierbaren Gewichte der Faltungsoperationen trainiert, die dann dazu dienen, Bildmerkmale zu erkennen. Diese Merkmale werden dann mit den Pooling Layern aggregiert. Anschließend werden die Gewichte der Fully Connected Layer iterativ trainiert, um aus den Merkmalen eine Wahrscheinlichkeit für die zugehörige Klasse zu ermitteln. Zusätzlich können vor der Analyse mit dem CNN-Algorithmus alle Bilder/Abschnitte in der gleichen Größe wie die zu analysierenden Ecken-Bildinformationsmatrizen ausgeschnitten (128x128 Pixel) und derart ausgerichtet werden, dass sie in die gleiche Orientierung gebracht wurden, um eine konsistente Ansicht zu ermöglichen.

Ergebnisse der Segmentierung sind in Schritt 250 beispielsweise Bildinformations-Abschnitte in Form von Terrassenabschnitten (zu den Terrassen 126, 127, 128, 129) aus dem in Schritt 206 bestimmten Maximalbild, wobei die Bildinformationen durch direkte Aufnahme mittels der Matrix-kamera 40 von oben erzeugt worden sind. Nun wird auf diese Terrassen-Bildinformations-Abschnitte der Mask-RCNN-Algorithmus angewendet (siehe unten detaillierter beschrieben, Schritt 252). Als Ergebnis werden Fehler in den Terrassen-Bildinformations-Abschnitten verschiedener Fehlertypen erkannt und mit einer Bounding-Box versehen (Schritt 254). Auch in Bezug auf die so erkannten Fehler auf den Terrassen-Bildinformations-Abschnitten wird anschließend der Schweregrad des jeweiligen Fehlers bestimmt, zum Beispiel basierend auf dem ermittelten Fehlertyp, der Größe der Bounding Box, der Form der Bounding Box etc. (Schritt 256).

Hierbei wird jeder Bereich der mittels Segmentierung extrahierten vorgegebenen Bereiche der lateralen Oberflächenabschnitte (z.B. Terrassenabschnitte einer Pouch-Zelle) mittels eines Objekt-Detektionsnetzwerks analysiert, das auf dem Mask-RCNN-Modell basiert. Der Algorithmus erkennt Fehler einer Vielzahl verschiedener Fehlertypen (beispielsweise 6 verschiedene Fehlertypen wie Vorsprung/Nase/Vorwölbung, Einkerbung, Falte, Kratzer, Kontamination, Partikel) und ergänzt die Daten des entsprechenden zweiten Bildinformations-Abschnitts im Bereich des Fehlers mit einer entsprechenden Umrandung (Bounding Box). Zum Training des Mask-RCNN-Modells als Algorithmus werden Daten, die einen entsprechenden zweiten Bildinformations-Abschnitt darstellen, verwendet, wobei in diesen Bildinformations-Matrizen die entsprechenden Fehler annotiert und mit einer Bounding-Box versehen sind. Die Architektur des Mask-RCNN-Modells wurde sorgfältig ausgewählt. Dieses Modell stellt eine Weiterentwicklung des Faster R-CNN-Modells dar und ist in der Lage, Bounding Boxes sowie Masken für Fehler in den vorgegebenen Bereichen zu generieren. Selten auftretende Fehlertypen werden zum Training des Modells in künstlich in entsprechende Bildinformations-Abschnitte der vorgegebenen Bereiche eingefügt. Die Leistung des jeweiligen Modells wird anhand eines separaten Validierungsdatensatzes evaluiert. Beispielsweise kann ein Validierungsdatensatz mit einem Verhältnis von 80% für die Trainingsdaten und 20% für die Validierungsdaten verwendet werden. Hierdurch wird sichergestellt, dass das Modell effizient und präzise Fehler erkennt und zutreffend klassifiziert.

Das Ergebnis der Segmentierung sind in Schritt 260 beispielsweise Bildinformations-Abschnitte in Form des oberen Oberflächenabschnitts 113, zum Beispiel das Maximalbild und ein aus der zeilenweise Erfassung zusammengesetztes Bild, das jeweils den oberen Oberflächenabschnitt 113 umfasst. Diese Bildinformations-Abschnitte werden in Schritt 262 in Patches unterteilt und anschließend in Schritt 264 wie unten beschrieben mittels des vortrainierten CNN-Algorithmus "Wide ResNet-50" analysiert. Gegebenenfalls wird in einigen Patches eine Anomalie oder mehrere Anomalien festgestellt. In Schritt 266 werden der Mahalanobis-Abstand zur Normalverteilung für jedes Patch, in dem eine Anomalie ermittelt wurde, und jede festgestellte Anomalie bestimmt. Hieraus wird in Schritt 268 der Schweregrad der Anomalie und damit des jeweiligen Fehlers bestimmt.

Bei der Analyse des Segmentierungs-Ergebnisses in Schritt 260 kann in einem Ausführungsbeispiel die Auflösung in dem vorgegebenen Bereich auf einen vorgegebenen Wert reduziert (z.B. von 5120 x 2216 auf 841 x 265 Pixel), um das Verfahren zu beschleunigen. Das Bild wird in mehrere kleinen Patches (Teilbereiche) unterteilt (Schritt 262). Anschließend wird ein vortrainierter CNN-Algorithmus ,Wide ResNet-50' als ersten NN-Algorithmus verwendet, um jedes Patch dahingehend zu untersuchen, ob in dem jeweiligen Patch eines oder mehrere vorgegebene Features (Merkmale/Fehler/Anomalien) vorhanden sind. Bei "Wide ResNet-50" werden die Schichten des Netzes "breiter" gemacht, indem die Anzahl der Kanäle in den Convolutional Schichten erhöht wird. Dieses CNN ist in der Lage, komplexe Muster und Texturen zu erkennen. Es wurde darüber hinaus beobachtet, dass solche breiteren CNN oft besser generalisieren können, was bedeutet, dass sie neue, unbekannte Daten effektiver verarbeiten können. Das Verfahren wird auch als PaDiM bezeichnet (Patch Distribution Modeling Framework for Anomaly Detection and Localization) und ist ein Algorithmus für die Aufgabe der Anomaliedetektion und -lokalisierung. Dieser Ansatz ist besonders geeignet für die Erkennung von industriellen Fehlern, wo es darum geht, Unregelmäßigkeiten oder Abweichungen von der Norm in visuellen Daten zu identifizieren. PaDiM modelliert die Verteilung der Merkmale eines Bildes. Anschließend werden für jeden Patch die vom CNN extrahierten Features gesammelt. Für jedes Patch wird der Mahalanobis-Abstand zwischen den Merkmalen des Patches und einer Normalverteilung, die aus den Trainingsdaten abgeleitet wurde, berechnet. Dieser Schritt ermittelt, wie ,anormal' oder ungewöhnlich jeder Patch im Vergleich zu normalen Trainingsdaten ist. Der berechnete Mahalanobis-Abstand dient als Anomalie-Score, wobei ein höherer Wert auf eine stärkere Abweichung von der Normalität hinweist. Basierend auf dem Anomalie-Score wird ein Schwellenwert festgelegt. Patches mit einem Score, der diesen Schwellenwert überschreitet, werden als anormal angesehen. Die Lokalisierung von Anomalien erfolgt durch Markierung der Positionen der als anormal eingestuften Patches im Bildinformations-Abschnitt, was die Lokalisierung der Anomalien in dem jeweiligen Bildinformations-Abschnitt ermöglicht.

Der Anomalie-Score wird für jedes Patch separat berechnet, und zwar indem der Mahalanobis-Abstand seiner Merkmale zur erwarteten Normalverteilung berechnet wird, der durch Mittelwert und Kovarianzmatrix aus den Trainingsdaten repräsentiert wird. Ein großer Mahalanobis-Abstand deutet darauf hin, dass die Merkmale des Patches stark von der Normalverteilung abweichen, was auf eine potenzielle Anomalie hinweist. Mathematisch wird der Mahalanobis-Abstand D eines Punktes x zu einer Verteilung mit dem Mittelwert µ und der Kovarianzmatrix Σ wie folgt berechnet: $D \left(x\right) = \sqrt{{\left(x-μ\right)}^{⊤} {Σ}^{- 1} \left(x-μ\right)}$
- D(x) ist der Mahalanobis-Abstand für den Punkt
- X ist der Vektor der beobachteten Werte.
- µ ist der Mittelwertvektor, basierend auf der Trainingsdatenmenge.
- Σ ist die Kovarianzmatrix der Trainingsdaten.
- Σ⁻¹ ist die Inverse der Kovarianzmatrix.
- T bezeichnet die Transposition des Vektors.

Aus dem Anomalie-Score jedes Patches ergibt sich für das jeweilige Patch eine Bewertung des Schweregrads des in dem Patch vorliegenden Fehlers.

Der Schweregrad des Fehlers wird in allen oben genannten Fällen in Form von vorgegebenen Klassen ausgedrückt.

Anschließend wird in Schritt 270 durch die Datenverarbeitungseinrichtung 70 die Qualität der Pouch-Zelle 111 insgesamt bewertet und zwar basierend auf allen, in den vier Analyse-Strängen ermittelten Fehlern, dem jeweiligen Fehlertyp und dem jeweiligen Schweregrad des Fehlers. Es wird bewertet, ob die Pouch-Zelle 111 insgesamt den vorgegebenen Qualitätsanforderungen entspricht oder nicht. In Schritt 280 wird das Ergebnis der Gesamtbewertung an einer Schnittstelle der Datenverarbeitungseinrichtung ausgegeben, gegebenenfalls zusammen mit einer Liste der ermittelten Fehler und deren Eigenschaften. Beispielsweise wird eine Pouch-Zelle mit zwei Fehlern vom Typ "Dent" der Schweregrad-Klasse 5 als für die Qualitätsanforderungen ausreichend beurteilt. Demgegenüber kann beispielsweise eine Pouch-Zelle, die einen Fehler vom Fehlertyp "Dent" der Schweregrad-Klasse 7 aufweist, als nicht den Qualitätsanforderungen entsprechend eingestuft werden.

Das obige Verfahren kann analog auch für die Unterseite der Pouch-Zelle durchgeführt werden.

Wie oben gezeigt wurde, kann anhand des erfindungsgemäßen Verfahrens eine Inspektion eines dreidimensionalen Objekts, z.B. einer Pouch-Zelle, auf einfache und schnelle Weise durchgeführt werden, wobei bei der Analyse insbesondere die verschiedenen Eigenschaften der Abschnitte des Objekts berücksichtigt werden können.

## Patentansprüche

1. Vorrichtung (1, 101) zur Inspektion von 3-dimensionalen Objekten, beispielsweise von Pouch-Zellen (11, 31, 111), wobei jedes Objekt ein im Wesentlichen kissenförmiges oder quaderförmiges Gehäuse mit einer Oberseite und einer Unterseite aufweist,
wobei sich die Oberseite des Gehäuses (12, 112) aus mindestens einem oberen Oberflächenabschnitt (13, 113) sowie einer Vielzahl von lateralen Oberflächenabschnitten (17, 18, 21, 22, 23, 24, 117, 118, 121, 122, 123, 124, 125, 126, 127, 128, 129) zusammensetzt, die zu dem mindestens einen oberen Oberflächenabschnitt (13, 113) schräg, parallel oder senkrecht verlaufen oder Eckenabschnitte (125) darstellen,
wobei sich die Unterseite des Gehäuses aus mindestens einem unteren Oberflächenabschnitt sowie einer Vielzahl von lateralen Oberflächenabschnitten zusammensetzt, die zu dem mindestens einen unteren Oberflächenabschnitt schräg, parallel oder senkrecht verlaufen oder Eckenabschnitte darstellen,
wobei die Vorrichtung
• eine Bewegungserfassungseinrichtung, welche in Bezug auf jedes zu inspizierende Objekt Bewegungsinformationen im Hinblick auf eine relative Bewegung zu einer Linien-Beleuchtungseinrichtung (Bewegungszustand) und im Hinblick auf eine Anordnung in einer vorgegebenen Position und über einen vorgegebenen Zeitraum in Bezug auf eine Flächen-Beleuchtungseinrichtung (Ruhezustand) erfasst,
• die Linien-Beleuchtungseinrichtung (51) zur Beleuchtung eines linienförmigen Bereichs der Oberseite des zu inspizierenden Objekts,
• die Flächen-Beleuchtungseinrichtung (52, 53, 55, 56) zur Beleuchtung der Oberseite des Gehäuses des zu inspizierenden Objekts von oben in ihrem Ruhezustand,
• gegebenenfalls mindestens einen, neben jeweils einer Seite des Gehäuses im Ruhezustand des Objekts angeordneten ersten Umlenkspiegel (65, 67) und
• eine oberhalb des jeweils zu inspizierenden Objekts angeordnete Matrixkamera (40) zur Erfassung von Bildinformationen in einem Sichtbereich umfasst, wobei der Sichtbereich
∘ zur zeilenweisen Erfassung des von dem linienförmigen Bereich der Oberseite in die Matrixkamera reflektierten Lichts der Linien-Beleuchtungseinrichtung in dem Bewegungszustand des zu inspizierenden Objekts und
∘ zur matrixweisen Erfassung des von der Oberseite nach oben reflektierten Lichts der Flächen-Beleuchtungseinrichtung in dem Ruhezustand des zu inspizierenden Objekts, gegebenenfalls einschließlich des von den lateralen Oberflächenabschnitten, wenn anwendbar über den mindestens einen ersten Umlenkspiegel, in die Matrixkamera reflektierten Lichts eingerichtet ist, und
wobei eine Datenverarbeitungseinrichtung (70, 170) vorgesehen ist, welche zum Empfangen und zur Verarbeitung der von der Matrixkamera aufgenommen Bildinformationen und der erfassten Bewegungsinformationen eingerichtet ist, wobei die Datenverarbeitungseinrichtung hierbei dem jeweiligen zu inspizierenden Objekt die im Bewegungszustand zeilenweise erfassten Bildinformationen und die im Ruhezustand matrixweise erfassten Bildinformationen zuordnet und aus diesen Bildinformationen das Vorhandensein eines Fehlers mindestens eines Fehlertyps feststellt und/oder eine Qualitäts-Kennzahl ermittelt, welche eine Beurteilung der Qualität des Objekts erlaubt.

2. Vorrichtung nach Anspruch 1, **dadurch gekennzeichnet, dass** sich der beleuchtete linienförmige Bereich über die gesamte Länge der Oberseite erstreckt.

3. Vorrichtung nach einem der vorhergehenden Ansprüche, **dadurch gekennzeichnet, dass** die Matrixkamera derart eingerichtet ist, dass sie zumindest bei einer ihrer Aufnahmen einer Erfassungssequenz
• zeilenweise das von dem linienförmigen Bereich der Oberseite reflektierte Licht der Linien-Beleuchtungseinrichtung in dem Bewegungszustand eines ersten Objekts und
• matrixweise das von der Oberseite nach oben reflektierte Licht der Flächen-Beleuchtungseinrichtung in dem Ruhezustand eines zweiten Objekts, gegebenenfalls einschließlich des von den lateralen Oberflächenabschnitten des zweiten Objekts, wenn anwendbar über den mindestens einen ersten Umlenkspiegel, in die Matrixkamera reflektierte Licht, wobei das zweite Objekt von dem ersten Objekt verschieden ist,
erfasst.

4. Vorrichtung nach einem der vorhergehenden Ansprüche, **dadurch gekennzeichnet, dass** mindestens vier erste Umlenkspiegel vorgesehen sind, wobei im Ruhezustand des Objekts jeder erste Umlenkspiegel jeweils neben einer Seite des Gehäuses angeordnet ist.

5. Vorrichtung nach einem der vorhergehenden Ansprüche, **dadurch gekennzeichnet, dass** die Flächen-Beleuchtungseinrichtung zur Beleuchtung der Oberseite des Gehäuses des Objekts in dem Ruhezustand des zu inspizierenden Objekts zeitlich nacheinander aus mindestens zwei verschiedenen Richtungen von schräg oben eingerichtet ist und
dass die Matrixkamera entsprechend für die zeitlich nacheinander erfolgende matrixweise Erfassung der Bildinformationen bei der Beleuchtung aus den mindestens zwei Richtungen der Flächen-Beleuchtungseinrichtung eingerichtet ist und
dass die Datenverarbeitungseinrichtung entsprechend zum Empfangen und zur Verarbeitung der mindestens zwei matrixweise erfassten Bildinformationen bei der Beleuchtung aus den mindestens zwei Richtungen der Flächen-Beleuchtungseinrichtung eingerichtet ist, diese Bildinformationen dem jeweiligen Objekt zuordnet und zur Ermittlung des Vorhandenseins eines Fehlers mindestens eines Fehlertyps und/oder der Qualitäts-Kennzahl heranzieht, welche die Beurteilung der Qualität des Objekts erlaubt.

6. Vorrichtung nach Anspruch 5, **dadurch gekennzeichnet, dass** die Datenverarbeitungseinrichtung für die Ermittlung des Vorhandenseins eines Fehlers mindesten eines Fehlertyps und/oder der Qualitäts-Kennzahl ein Maximalbild der Bildinformationen heranzieht, welches aus den mindestens zwei matrixweise erfassten Bildinformationen bei der Beleuchtung aus den mindestens zwei Richtungen der Flächen-Beleuchtungseinrichtung bestimmt wurde.

7. Vorrichtung nach einem der vorhergehenden Ansprüche, **dadurch gekennzeichnet, dass** die Linien-Beleuchtungseinrichtung eine linienförmige HDR-Reflection-Bright-Field Beleuchtung aussendet.

8. Vorrichtung nach einem der vorhergehenden Ansprüche, **dadurch gekennzeichnet, dass** die Matrixkamera derart kalibriert ist, dass durch die Datenverarbeitungseinrichtung Perspektive und optische Verzerrung aus den matrixweise erfassten Bildinformationen berücksichtigbar ist.

9. Vorrichtung nach Anspruch 8, **dadurch gekennzeichnet, dass** die Datenverarbeitungseinrichtung derart eingerichtet ist, dass sie nach Berücksichtigung der Perspektive und der optischen Verzerrung mindestens eine Abmessung des Objekts und/oder mindestens eine Größe eines ermittelten Fehlers ermittelt.

10. System mit einer ersten Vorrichtung zur Inspektion von 3-dimensionalen Objekten nach einem der vorherigen Ansprüche und einer zweiten Vorrichtung zur Inspektion von 3-dimensionalen Objekten nach einem der vorherigen Ansprüche, wobei die zweite Vorrichtung zur Inspektion von 3-dimensionalen Objekten in Transportrichtung des zu inspizierenden Objekts hinter der ersten Vorrichtung zur Inspektion von 3-dimensionalen Objekten angeordnet ist, wobei mittels der zweiten Vorrichtung zur Inspektion von 3-dimensionalen Objekten die Unterseite des Objekts inspiziert wird, die nach einer Umwendung des Objekts nach der ersten Vorrichtung zur Inspektion von 3-dimensionalen Objekten oben liegt.

11. Verfahren zur Inspektion von 3-dimensionalen Objekten, insbesondere von Pouch-Zellen, wobei jedes Objekt ein im Wesentlichen kissenförmiges oder quaderförmiges Gehäuse mit einer Oberseite und einer Unterseite aufweist,
wobei sich die Oberseite des Gehäuses aus mindestens einem oberen Oberflächenabschnitt sowie einer Vielzahl von lateralen Oberflächenabschnitten zusammensetzt, die zu dem mindestens einen oberen Oberflächenabschnitt schräg, parallel oder senkrecht verlaufen oder Eckenabschnitte darstellen,
**wobei sich** die Unterseite des Gehäuses aus mindestens einem unteren Oberflächenabschnitt an der Unterseite sowie einer Vielzahl von lateralen Oberflächenabschnitten zusammensetzt, die zu dem mindestens einen unteren Oberflächenabschnitt schräg, parallel oder senkrecht verlaufen oder Eckenabschnitte darstellen,
wobei das Verfahren die folgenden Schritte aufweist:
• Erfassen von Bewegungsinformationen im Hinblick auf eine relative Bewegung jedes zu inspizierenden Objekts zu einer Linien-Beleuchtungseinrichtung (Bewegungszustand) und im Hinblick auf eine Anordnung des jeweiligen Objekts in einer vorgegebenen Position und über einen vorgegebenen Zeitraum in Bezug auf eine Flächen-Beleuchtungseinrichtung (Ruhezustand) mittels einer Bewegungserfassungseinrichtung,
• Beleuchten eines linienförmigen Bereichs der Oberseite des zu inspizierenden Objekts mittels der Linien-Beleuchtungseinrichtung, welche beispielsweise eine linienförmige HDR-Reflection-Bright-Field Beleuchtung aussendet,
• Beleuchten der Oberseite des Gehäuses des zu inspizierenden Objekts von oben in ihrem Ruhezustand mittels der Flächen-Beleuchtungseinrichtung,
• Erfassung von Bildinformationen in einem Sichtbereich mittels einer oberhalb der Ruhezustands-Position des jeweils zu inspizierenden Objekts angeordneten Matrixkamera, wobei der Sichtbereich
∘ zur zeilenweisen Erfassung des von dem linienförmigen Bereich der Oberseite in die Matrixkamera reflektierten Lichts der Linien-Beleuchtungseinrichtung in dem Bewegungszustand des zu inspizierenden Objekts und
∘ zur matrixweisen Erfassung des von der Oberseite nach oben reflektierten Lichts der Flächen-Beleuchtungseinrichtung in dem Ruhezustand des zu inspizierenden Objekts, gegebenenfalls einschließlich des von den lateralen Oberflächenabschnitten des zu inspizierenden Objekts, wenn anwendbar über mindestens einen ersten Umlenkspiegel in die Matrixkamera reflektierten Lichts, eingerichtet ist,
• Empfangen und Verarbeiten der von der Matrixkamera aufgenommen Bildinformationen und der erfassten Bewegungsinformationen mittels einer Datenverarbeitungseinrichtung, wobei die Datenverarbeitungseinrichtung hierbei dem jeweiligen zu inspizierenden Objekt die im Bewegungszustand zeilenweise erfassten Bildinformationen und die im Ruhezustand matrixweise erfassten Bildinformationen zuordnet und aus diesen Bildinformationen das Vorhandensein eines Fehlers mindestens eines Fehlertyps feststellt und/oder eine Qualitäts-Kennzahl ermittelt, welche eine Beurteilung der Qualität des Objekts erlaubt.

12. Verfahren nach Anspruch 11, **dadurch gekennzeichnet, dass** sich der beleuchtete linienförmige Bereich über die gesamte Länge der Oberseite erstreckt und/oder dass mindestens vier erste Umlenkspiegel vorgesehen sind, wobei jeder Umlenkspiegel im Ruhezustand des Objekts jeweils neben einer Seite des Gehäuses angeordnet ist.

13. Verfahren nach einem der Ansprüche 11 bis 12, **dadurch gekennzeichnet, dass** durch die Matrixkamera zumindest bei einer ihrer Aufnahmen einer Erfassungssequenz
• zeilenweise das von dem linienförmigen Bereich der Oberseite reflektierte Licht der Linien-Beleuchtungseinrichtung in dem Bewegungszustand eines ersten Objekts und
• matrixweise das von der Oberseite nach oben reflektierte Licht der Flächen-Beleuchtungseinrichtung in dem Ruhezustand eines zweiten Objekts, gegebenenfalls einschließlich des von den lateralen Oberflächenabschnitten des zweiten Objekts, wenn anwendbar über den mindestens einen ersten Umlenkspiegel, in die Matrixkamera reflektierte Licht, wobei das zweite Objekt von dem ersten Objekt verschieden ist,
erfasst wird.

14. Verfahren nach einem der Ansprüche 11 bis 13, **dadurch gekennzeichnet, dass** die Flächen-Beleuchtungseinrichtung die Oberseite des Gehäuses des Objekts in dem Ruhezustand des zu inspizierenden Objekts zeitlich nacheinander aus mindestens zwei verschiedenen Richtungen von schräg oben beleuchtet und
dass die Matrixkamera entsprechend zeitlich nacheinander die Bildinformationen der Matrixkamera bei der Beleuchtung aus den mindestens zwei Richtungen der Flächen-Beleuchtungseinrichtung matrixweise erfasst und
dass mittels der Datenverarbeitungseinrichtung die mindestens zwei matrixweise erfassten Bildinformationen bei der Beleuchtung aus den mindestens zwei Richtungen der Flächen-Beleuchtungseinrichtung entsprechend empfangen und verarbeitet werden, diese Bildinformationen dem jeweiligen Objekt zugeordnet und zur Ermittlung des Vorhandenseins eines Fehlers mindestens eines Fehlertyps und/oder der Qualitäts-Kennzahl herangezogen werden, wobei die Datenverarbeitungseinrichtung beispielsweise für die Ermittlung des Vorhandenseins eines Fehlers mindesten eines Fehlertyps und/oder der Qualitäts-Kennzahl ein Maximalbild der Bildinformationen heranzieht, welches aus den mindestens zwei matrixweise erfassten Bildinformationen bei der Beleuchtung aus den mindestens zwei Richtungen der Flächen-Beleuchtungseinrichtung bestimmt wurde.

15. Verfahren nach einem der Ansprüche 11 bis 14, **dadurch gekennzeichnet, dass** die Matrixkamera derart kalibriert wird, dass durch die Datenverarbeitungseinrichtung Perspektive und optische Verzerrung aus den matrixweise erfassten Bildinformationen berücksichtigbar ist, wobei beispielsweise mittels der Datenverarbeitungseinrichtung nach Berücksichtigung der Perspektive und der optischen Verzerrung mindestens eine Abmessung des Objekts und/oder mindestens eine Größe eines ermittelten Fehlers ermittelt wird.

## Claims

1. A device (1, 101) for inspecting three-dimensional objects, for example pouch cells (11, 31, 111), wherein each object comprises a housing that is essentially pouch-shaped or cuboid-shaped and has a top side and a bottom side,
wherein the top side of the housing (12, 112) is composed of at least one upper surface section (13, 113) and a plurality of lateral surface sections (17, 18, 21, 22, 23, 24, 117, 118, 121, 122, 123, 124, 125, 126, 127, 128, 129) which run obliquely, in parallel or perpendicularly to the at least one upper surface section (13, 113) or form corner sections (125),
wherein the bottom side of the housing is composed of at least one bottom surface section and a plurality of lateral surface sections that run obliquely, in parallel or perpendicularly to the at least one bottom surface section, or form corner sections,
the device comprising
• a motion detection unit that captures motion data with respect to each object to be inspected, with regard to relative motion to a line lighting unit (motion state) and with regard to an arrangement in a predetermined position and over a predetermined time period with respect to an area lighting unit (rest state),
• the line lighting unit (51) for illuminating a line-shaped area of the top side of the object to be inspected,
• the area lighting unit (52, 53, 55, 56) for illuminating the top side of the housing of the object to be inspected from above in its rest state,
• if necessary, at least one first deflecting mirror (65, 67) arranged next to respectively one side of the housing in the rest state of the object and
• a matrix camera (40) arranged above the object to be inspected for capturing image data in a field of view, wherein the field of view is configured
∘ for line-by-line capturing of the line lighting unit's light reflected into the matrix camera from the line-shaped area of the top side in the motion state of the object to be inspected and
∘ for the matrix-wise capturing of the area lighting unit's light reflected upwards from the top side in the rest state of the object to be inspected, optionally including the light reflected from the lateral surface sections, if applicable via the at least one first deflection mirror, into the matrix camera, and
wherein a data processing unit (70, 170) is provided, which is configured to receive and process the image data recorded by the matrix camera and the detected motion data, wherein the data processing unit assigns the image data captured line-by-line in the motion state and the image data captured matrix-wise in the rest state to the respective object to be inspected and determines from these image data the presence of a defect of at least one defect type and/or determines a quality score which allows an assessment of the quality of the object.

2. The device according to claim 1, **characterised in that** the line-shaped area which is illuminated extends over the entire length of the top side.

3. The device according to any one of the preceding claims, **characterised in that** the matrix camera is configured to capture, in at least one of its captures of a detection sequence
• line-by-line the line lighting unit's light reflected from the line-shaped area of the top side in the motion state of a first object and
• matrix-wise the light reflected upwards from the top side of the area lighting unit in the rest state of a second object, optionally the light reflected from the lateral surface sections of the second object, if applicable via the at least one first deflection mirror, into the matrix camera, wherein the second object is different from the first object.

4. The device according to any one of the preceding claims, **characterised in that** at least four first deflecting mirrors are provided, wherein in the rest state of the object each first deflecting mirror is arranged next to a side of the housing, respectively.

5. The device according to any one of the preceding claims, **characterised in that** the area lighting unit is configured to illuminate the top side of the object's housing in the rest state of the object to be inspected temporally in succession from at least two different directions from an oblique top side, and
**in that** the matrix camera is configured for temporally successive matrix-wise capture of the at least two image data for the illuminations of the at least two directions of the area lighting unit, and
**in that** the data processing unit is correspondingly configured to receive and process the at least two image data captured matrix-wise during illuminations of the at least two directions of the area lighting unit, associates these image data with the respective object and uses these image data to determine the presence of a defect of at least one defect type and/or the quality score, which allows the quality of the object to be assessed.

6. The device according to claim 5, **characterised in that** the data processing unit uses a maximum image of the image data, which was determined from the at least two image data captured matrix-wise when illuminated from the at least two directions of the area lighting unit, to determine the presence of a defect of at least one defect type and/or the quality score.

7. The device according to any one of the preceding claims, **characterised in that** the line lighting unit emits line-shaped HDR reflection bright field illumination.

8. The device according to any one of the preceding claims, **characterised in that** the matrix camera is calibrated in such a way that image data processing by the data processing unit takes into account perspective and optical distortion contained in the image data captured matrix-wise.

9. The device according to claim 8, **characterised in that** the data processing unit is configured to determine at least one dimension of the object and/or at least one size of a detected defect after taking into account the perspective and the optical distortion.

10. A system comprising a first device for inspecting three-dimensional objects according to any one of the preceding claims and a second device for inspecting three-dimensional objects according to any one of the preceding claims, wherein the second device for inspecting three-dimensional objects is arranged downstream of the first device for inspecting three-dimensional objects in the direction of transport of the object to be inspected, wherein the bottom side of the object, which is located on top after the object has been turned over after the first device for inspecting three-dimensional objects, is inspected by means of the second device for inspecting three-dimensional objects.

11. A method for inspecting 3-dimensional objects, in particular pouch cells, wherein each object comprises a housing that is essentially pouch-shaped or cuboid-shaped and has a top side and a bottom side,
wherein the top side of the housing is composed of at least one upper surface section and a plurality of lateral surface sections, which run obliquely, in parallel or perpendicularly to the at least one upper surface section or form corner sections,
wherein the bottom side of the housing is composed of at least one lower surface section on the bottom side as well as a plurality of lateral surface sections which run obliquely, in parallel or perpendicularly to the at least one lower surface section or form corner sections, wherein the method comprises the following steps:
• detecting motion data with regard to a relative movement of each object to be inspected to a line lighting unit (motion state) and with regard to an arrangement of the respective object in a predetermined position and over a predetermined time period in relation to an area lighting unit (rest state) by means of a motion detection unit,
• illuminating a line-shaped area of the top side of the object to be inspected by means of the line lighting unit, which, for example, emits line-shaped HDR reflection bright field illumination,
• illuminating the top side of the housing of the object to be inspected from above in its rest state by means of the area lighting unit,
• capturing image data in a field of view by means of a matrix camera arranged above the rest state position of the object to be inspected, wherein the field of view is configured
∘ for line-by-line capturing of the line lighting unit's light reflected into the matrix camera by the line-shaped area of the top side in the motion state of the object to be inspected and
∘ for matrix-wise capturing of the light reflected upwards from the top side of the area lighting unit in the rest state of the object to be inspected, optionally including the light reflected from the lateral surface sections of the object to be inspected, if applicable via at least one first deflecting mirror into the matrix camera,
• receiving and processing the image data captured by the matrix camera and the detected motion data by means of a data processing unit, wherein the data processing unit assigns the image data captured line-by-line in the motion state and the image data captured matrix-wise in the rest state to the respective object to be inspected and determines from these image data the presence of a defect of at least one defect type and/or determines a quality score, which allows an assessment of the quality of the object.

12. The method according to claim 11, **characterised in that** the illuminated line-shaped area extends over the entire length of the top side and/or **in that** at least four first deflecting mirrors are provided, wherein each deflecting mirror is arranged in the rest state of the object next to a respective side of the housing.

13. The method according to any one of claims 11 to 12, **characterised by** capturing by means of the matrix camera, in at least in one of its captures of a detection sequence,
∘ line-by-line, the line lighting unit's light reflected from the line-shaped area of the top side in the motion state of a first object and
∘ matrix-wise the area lighting unit's light reflected upwards from the top side in the rest state of a second object, optionally the light reflected from the lateral surface sections of the second object, if applicable via the at least one first deflection mirror, into the matrix camera, wherein the second object is different from the first object.

14. The method according to any one of claims 11 to 13, **characterised in that** the area lighting unit illuminates the top side of the housing of the object in the rest state of the object to be inspected temporally in succession from at least two different directions obliquely from above and
**in that** the matrix camera correspondingly temporally successive captures matrix-wise the image data of the matrix camera of the illuminations from the at least two directions of the area lighting unit and
**in that** by means of the data processing unit the at least two image data captured matrix-wise are received and processed accordingly, these image data are assigned to the respective object and used to determine the presence of a defect of at least one defect type and/or the quality score, wherein the data processing unit for example uses a maximum image of the image data, which was determined from the at least two image data captured matrix-wise when illuminated from the at least two directions of the area lighting unit, to determine the presence of a defect of at least one defect type and/or the quality score.

15. The method according to any one of claims 11 to 14, **characterised in** the matrix camera is calibrated in such a way that the image data processing of the data processing unit takes into account perspective and optical distortion contained in the image data captured matrix-wise, wherein, for example, by means of the data processing unit, at least one dimension of the object and/or at least one size of a detected defect is determined after taking into account the perspective and the optical distortion.

## Revendications

1. Dispositif (1, 101) d'inspection d'objets tridimensionnels, par exemple des cellules de poche (11, 31, 111), chaque objet comportant un boîtier sensiblement en forme de coussin ou en forme de parallélépipède doté d'une face supérieure et d'une face inférieure,
ladite face supérieure du boîtier (12, 112) étant composée d'au moins une partie supérieure de surface supérieure (13, 113) ainsi que d'une pluralité de parties latérales de surface supérieure (17, 18, 21, 22, 23, 24, 117, 118, 121, 122, 123, 124, 125, 126, 127, 128, 129) qui sont obliques, parallèles ou perpendiculaires à ladite au moins une partie supérieure de surface supérieure (13, 113) ou qui constituent des portions d'angle (125),
ladite face inférieure du boîtier étant composée d'au moins une partie inférieure de surface supérieure ainsi que d'une pluralité de parties latérales de surface supérieure qui sont obliques, parallèles ou perpendiculaires à ladite au moins une partie inférieure de surface supérieure ou qui constituent des portions d'angle,
ledit dispositif comprenant
• un dispositif de détection de déplacement qui, en référence à chaque objet à inspecter, collecte des informations de déplacement concernant un déplacement relatif vers un dispositif d'éclairage linéaire (état de déplacement) et concernant un agencement dans une position prédéfinie et sur une période prédéfinie par rapport à un dispositif d'éclairage de surface (état au repos),
• le dispositif d'éclairage linéaire (51) destiné à éclairer une zone en forme de ligne de la partie supérieure de l'objet à inspecter,
• le dispositif d'éclairage de surface (52, 53, 55, 56) destiné à éclairer la face supérieure du boîtier de l'objet à inspecter par le haut dans son état au repos,
• éventuellement, au moins un premier miroir de déviation (65, 67) disposé à proximité d'une face du boîtier dans l'état au repos de l'objet, et
• une caméra à matrice (40) disposée au-dessus de l'objet à inspecter pour collecter des informations d'image dans un champ de vision, ledit champ de vision étant conçu
∘ pour la détection ligne par ligne de la lumière réfléchie par la zone en forme de ligne de la face supérieure dans la caméra à matrice du dispositif d'éclairage linéaire dans l'état de déplacement de l'objet à inspecter et
∘ pour la détection matrice par matrice de la lumière du dispositif d'éclairage de surface réfléchie vers le haut à partir de la face supérieure dans l'état au repos de l'objet à inspecter, y compris éventuellement la lumière réfléchie par les parties latérales de surface supérieure, le cas échéant, par l'intermédiaire d'au moins un premier miroir de déviation dans la caméra à matrice, et
un dispositif de traitement de données (70, 170) étant prévu, qui est configuré pour recevoir et traiter les informations d'image enregistrées par la caméra à matrice et les informations de déplacement collectées, ledit dispositif de traitement de données attribuant à l'objet respectif à inspecter les informations d'image collectées ligne par ligne dans l'état de déplacement et les informations d'image collectées matrice par matrice dans l'état au repos et la présence d'un défaut d'au moins un type de défaut étant établie à partir desdites informations d'image et/ou un indicateur de qualité étant déterminé, lequel permet d'évaluer la qualité de l'objet.

2. Dispositif selon la revendication 1, **caractérisé en ce que** la zone en forme de ligne éclairée s'étend sur toute la longueur de la face supérieure.

3. Dispositif selon l'une quelconque des revendications précédentes, **caractérisé en ce que** la caméra à matrice est configurée de sorte qu'elle détecte au moins dans l'un de ses enregistrements d'une séquence de détection
• ligne par ligne la lumière réfléchie par la zone en forme de ligne de la face supérieure du dispositif d'éclairage linéaire dans l'état de déplacement d'un premier objet et
• matrice par matrice la lumière du dispositif d'éclairage de surface réfléchie vers le haut à partir de la face supérieure dans l'état au repos d'un second objet, y compris éventuellement la lumière réfléchie par les parties latérales de surface supérieure du second objet, le cas échéant par l'intermédiaire dudit au moins un premier miroir de déviation, dans la caméra à matrice, le second objet étant différent du premier objet.

4. Dispositif selon l'une quelconque des revendications précédentes, **caractérisé en ce qu'**au moins quatre premiers miroirs de déviation sont prévus, chaque premier miroir de déviation étant disposé à proximité d'une face du boîtier dans l'état au repos de l'objet.

5. Dispositif selon l'une quelconque des revendications précédentes, **caractérisé en ce que** le dispositif d'éclairage de surface est conçu pour éclairer la face supérieure du boîtier de l'objet dans l'état au repos de l'objet à inspecter, successivement dans le temps, suivant au moins deux directions différentes à partir de la partie supérieure inclinée et
**en ce que** la caméra à matrice est configurée en conséquence pour la collecte matrice par matrice par périodes successives dans le temps des informations d'image lors de l'éclairage suivant lesdites au moins deux directions du dispositif d'éclairage de surface et
**en ce que** le dispositif de traitement de données est configuré en conséquence pour recevoir et pour traiter lesdites au moins deux informations d'image collectées matrice par matrice lors de l'éclairage suivant lesdites au moins deux directions du dispositif d'éclairage de surface, attribue ces informations d'image à l'objet respectif et pour déterminer la présence d'un défaut d'au moins un type de défaut et/ou l'indicateur de qualité, qui permet d'évaluer la qualité de l'objet.

6. Dispositif selon la revendication 5, **caractérisé en ce que** le dispositif de traitement de données attribue une image maximale des informations d'image pour déterminer la présence d'un défaut d'au moins un type de défaut et/ou l'indicateur de qualité, qui a été déterminé à partir desdites au moins deux informations d'image collectées matrice par matrice lors de l'éclairage suivant lesdites au moins deux directions du dispositif d'éclairage de surface.

7. Dispositif selon l'une quelconque des revendications précédentes, **caractérisé en ce que** le dispositif d'éclairage linéaire émet un éclairage HDR en réflexion à fond clair sous forme de ligne.

8. Dispositif selon l'une quelconque des revendications précédentes, **caractérisé en ce que** la caméra à matrice est étalonnée de sorte que la perspective et la distorsion optique puissent être prises en compte à partir des informations d'image collectées matrice par matrice par le dispositif de traitement de données.

9. Dispositif selon la revendication 8, **caractérisé en ce que** le dispositif de traitement de données est configuré de sorte qu'il détermine au moins une dimension de l'objet et/ou au moins une grandeur d'un défaut déterminé après la prise en compte de la perspective et de la distorsion optique.

10. Système comprenant un premier dispositif d'inspection d'objets tridimensionnels selon l'une quelconque des revendications précédentes et un second dispositif d'inspection d'objets tridimensionnels selon l'une quelconque des revendications précédentes, ledit second dispositif d'inspection d'objets tridimensionnels étant disposé en aval du premier dispositif d'inspection d'objets tridimensionnels dans la direction de transport de l'objet à inspecter, ledit second dispositif d'inspection d'objets tridimensionnels permettant d'inspecter la face inférieure de l'objet qui se trouve en haut après le retournement de l'objet après le premier dispositif d'inspection d'objets tridimensionnels.

11. Procédé d'inspection d'objets tridimensionnels, notamment de cellules de poche, chaque objet comportant un boîtier sensiblement en forme de coussin ou en forme de parallélépipède doté d'une face supérieure et d'une face inférieure,
ladite face supérieure du boîtier étant composée d'au moins une partie supérieure de surface supérieure et d'une pluralité de parties latérales de surface supérieure qui sont obliques, parallèles ou perpendiculaires à ladite au moins une partie supérieure de surface supérieure ou qui représentent des portions d'angle,
ladite face inférieure du boîtier étant composée d'au moins une partie inférieure de surface supérieure sur ladite face inférieure et d'une pluralité de parties latérales de surface supérieure qui sont obliques, parallèles ou perpendiculaires à ladite au moins une partie inférieure de surface supérieure ou qui représentent des portions d'angle, ledit procédé comprenant les étapes suivantes :
• la collecte d'informations de déplacement concernant un déplacement relatif de chaque objet à inspecter vers un dispositif d'éclairage de ligne (état de déplacement) et concernant un agencement de l'objet respectif dans une position prédéfinie et sur une période prédéfinie par rapport à un dispositif d'éclairage de surface (état au repos) au moyen d'un dispositif de détection de déplacement,
• l'éclairage d'une zone en forme de ligne de la partie supérieure de l'objet à inspecter au moyen du dispositif d'éclairage linéaire, qui émet par exemple un éclairage HDR-en réflexion à fond clair sous forme de ligne,
• l'éclairage de la face supérieure du boîtier de l'objet à inspecter par le haut dans son état au repos au moyen du dispositif d'éclairage de surface,
• la collecte d'informations d'image dans une champ de vision au moyen d'une caméra à matrice disposée au-dessus de la position de de l'état au repos de chaque objet à inspecter, ledit champ de vision étant conçu
∘ pour la détection ligne par ligne de la lumière réfléchie par la zone en forme de ligne de la face supérieure dans la caméra à matrice du dispositif d'éclairage linéaire dans l'état de déplacement de l'objet à inspecter et
∘ pour la détection matrice par matrice de la lumière du dispositif d'éclairage de surface réfléchie vers le haut à partir de la partie supérieure dans l'état au repos de l'objet à inspecter, y compris éventuellement la lumière réfléchie par les parties latérales de surface supérieure de l'objet à inspecter, le cas échéant par l'intermédiaire d'au moins un premier miroir de déviation dans la caméra à matrice,
• la réception et le traitement des informations d'image enregistrées par la caméra à matrice et des informations de déplacement enregistrées au moyen d'un dispositif de traitement de données, ledit dispositif de traitement de données attribuant à l'objet respectif à inspecter les informations d'image enregistrées dans l'état de déplacement ligne par ligne et les informations d'image enregistrées dans l'état au repos matrice par matrice et la présence d'un défaut d'au moins un type de défaut étant établie à partir desdites informations d'image et/ou un indicateur de qualité étant déterminé, qui permet d'évaluer la qualité de l'objet.

12. Procédé selon la revendication 11, **caractérisé en ce que** la zone sous la forme d'une ligne éclairée s'étend sur toute la longueur de la face supérieure et/ou **en ce qu'**au moins quatre premiers miroirs de déviation sont prévus, chaque miroir de déviation étant disposé à proximité d'une face du boîtier lorsque l'objet se trouve dans l'état au repos.

13. Procédé selon l'une quelconque des revendications 11 à 12, **caractérisé en ce que** la caméra à matrice détecte au moins dans l'un de ses enregistrements d'une séquence de détection
• ligne par ligne la lumière réfléchie par la zone de la forme d'une ligne de la face supérieure du dispositif d'éclairage linéaire dans l'état de déplacement d'un premier objet et
• matrice par matrice la lumière du dispositif d'éclairage de surface réfléchie vers le haut à partir de la face supérieure dans l'état au repos d'un second objet, y compris éventuellement la lumière réfléchie par les parties de surface supérieure latérales du second objet, le cas échéant par l'intermédiaire dudit au moins un premier miroir de déviation, dans la caméra à matrice, le second objet étant différent du premier objet.

14. Procédé selon l'une quelconque des revendications 11 à 13, **caractérisé en ce que** le dispositif d'éclairage de surface éclaire la face supérieure du boîtier de l'objet dans l'état au repos de l'objet à inspecter, successivement dans le temps, suivant au moins deux directions différentes obliquement vers le haut et
**en ce que** la caméra à matrice en conséquence collecte matrice par matrice successivement dans le temps les informations d'image de la caméra à matrice lors de l'éclairage suivant lesdites au moins deux directions du dispositif d'éclairage de surface et
**en ce que**, au moyen du dispositif de traitement de données, lesdites au moins deux informations d'image enregistrées matrice par matrice sont reçues et traitées en conséquence lors de l'éclairage suivant lesdites au moins deux directions du dispositif d'éclairage de surface, ces informations d'image sont attribuées à l'objet respectif et utilisées pour déterminer la présence d'un défaut d'au moins un type de défaut et/ou l'indicateur de qualité, ledit dispositif de traitement de données attribuant, par exemple, une image maximale des informations d'image pour déterminer la présence d'une défaut d'au moins un type de défaut et/ou l'indicateur de qualité, qui a été déterminé à partir desdites au moins deux informations d'image collectées matrice par matrice lors de l'éclairage suivant lesdites au moins deux directions du dispositif d'éclairage de surface.

15. Procédé selon l'une quelconque des revendications 11 à 14, **caractérisé en ce que** la caméra à matrice est étalonnée de sorte que la perspective et la distorsion optique puissent être prises en compte à partir des informations d'image collectées matrice par matrice par le dispositif de traitement de données, par exemple au moins une dimension de l'objet et/ou au moins une grandeur d'un défaut étant déterminée au moyen du dispositif de traitement de données après la prise en compte de la perspective et de la distorsion optique.
